(19) Europäisches Patentamt
European Patent Office
Office européen des brevets

(11) **EP 2 034 162 A1**

(12) **EUROPEAN PATENT APPLICATION**
published in accordance with Art. 153(4) EPC

(43) Date of publication:
**11.03.2009 Bulletin 2009/11**

(51) Int Cl.:
*F02D 19/08* (2006.01)  *F02B 1/12* (2006.01)
*F02B 11/00* (2006.01)  *F02B 15/00* (2006.01)
*F02B 23/10* (2006.01)  *F02D 41/02* (2006.01)
*F02D 41/04* (2006.01)  *F02D 45/00* (2006.01)

(21) Application number: **07745104.5**

(22) Date of filing: **12.06.2007**

(86) International application number:
**PCT/JP2007/061817**

(87) International publication number:
**WO 2007/148563 (27.12.2007 Gazette 2007/52)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **19.06.2006  JP 2006169166**

(71) Applicant: **Toyota Jidosha Kabushiki Kaisha Toyota-shi Aichi 471-8571 (JP)**

(72) Inventors:
• **ITO, Yasushi Toyota-shi Aichi 471-8571 (JP)**
• **TANNO, Shiro Toyota-shi Aichi 471-8571 (JP)**

(74) Representative: **Intes, Didier Gérard André et al Cabinet Beau de Loménie 158, rue de l'Université 75340 Paris Cedex 07 (FR)**

(54) **MULTIFUEL INTERNAL COMBUSTION ENGINE**

(57) To improve engine performance, fuel consumption performance, and emission performance in a high-load operation in a well-balanced manner. To provide a fuel property detecting unit that detects an ignitability index Pc and a volatility index Pv respectively found through indexation of an ignitability and a volatility of fuel including at least two types of fuels F1 and F2 with different properties in a combustion chamber CC, a combustion mode setting unit that sets a combustion mode to a stoichiometric compression auto-ignition diffusion combustion mode when the ignitability index Pc and the volatility index Pv are respectively equal to or higher than an ignitability determination reference value Pc1 and a volatility determination reference value Pv1 satisfying a good ignitability and a good volatility suitable for the stoichiometric compression auto-ignition diffusion combustion mode, and an operation condition is of high-load, and a combustion control execution unit that causes an operation in the combustion mode set by the combustion mode setting unit.

FIG.3

**Description**

TECHNICAL FIELD

The present invention relates to a multifuel internal combustion engine which operates by guiding at least one type of at least two types of fuels with different properties to a combustion chamber, or by guiding a mixed fuel of the at least two types of fuels to the combustion chamber.

BACKGROUND ART

A multifuel internal combustion engine, which operates using plural types of fuels with different properties, is conventionally known. For example, Patent Document 1 listed below discloses a multifuel internal combustion engine which can operate using a fuel selected by an operator from plural types of fuels such as gasoline, light oil, and ethanol. Further, Patent Document 1 describes a multifuel internal combustion engine which operates in a spark ignition mode when an engine load is lower than a predetermined level, and operates in a compression auto-ignition diffusion combustion mode when the engine load is higher. A wider operation range is set for the compression auto-ignition diffusion combustion mode when ignitability of the fuel in use is higher. Further, in Patent Document 2 listed below, a multifuel internal combustion engine operates using a mixed fuel of gasoline and light oil is described.

Patent Document 1: Japanese Patent Application Laid-Open no. 2004-245126

Patent Document 2: Japanese Patent Application Laid-Open No. H9-68061

DISCLOSURE OF INVENTION

PROBLEM TO BE SOLVED BY THE INVENTION

In the compression auto-ignition diffusion combustion, so-called knocking observed in gasoline engines generally does not occur since no anomalous combustion is caused. Therefore, the operation in the compression auto-ignition diffusion combustion mode, which does not cause knocking, is desirable for the increase in torque and output in a high-load range. Meanwhile, to reduce fuel consumption, an air-fuel ratio in a combustion chamber may be set to be lean. However, it is not preferable to carry out the compression auto-ignition diffusion combustion in a high-load range while the air-fuel ratio is set lean, because an amount of generated nitrogen oxides (NOx) increases. Thus, it is desirable to carry out the compression auto-ignition diffusion combustion by setting the air-fuel ratio in the combustion chamber to a theoretical air-fuel ratio, to improve an engine performance such as an output and to reduce the fuel consumption in the high-load range at the same time, and to further obtain satisfactory emission performance.

For the compression auto-ignition diffusion combustion, however, the fuel guided to the combustion chamber has to have such an ignitability as to realize auto-ignition in compressed air. When the ignitability of the fuel does not satisfy a predetermined level, the compression auto-ignition diffusion combustion cannot be carried out under the theoretical air-fuel ratio. Thus, balanced improvement of the engine performance, the fuel consumption performance, and the emission performance cannot be realized.

In view of the above, an object of the present invention is to provide a multifuel internal combustion engine which can alleviate the inconveniences of the conventional technologies and improve the engine performance, the fuel consumption performance, and the emission performance at the time of high-load operation in a well-balanced manner.

MEANS FOR SOLVING PROBLEM

To achieve an object as described above, according to an aspect of the present invention as recited in claim 1, a multifuel internal combustion engine operating by guiding at least one type of fuel among at least two types of fuels with different properties to a combustion chamber, or by guiding a mixed fuel of the at least two types of fuels to the combustion chamber, includes a fuel property detecting unit that detects an ignitability index and a volatility index respectively found through indexation of an ignitability and a volatility of the fuel in the combustion chamber, a combustion mode setting unit that sets a combustion mode to a stoichiometric compression auto-ignition diffusion combustion mode when the ignitability index and the volatility index detected by the fuel property detecting unit are respectively equal to or higher than an ignitability determination reference value and a volatility determination reference value satisfying a good ignitability and a good volatility suitable for the stoichiometric compression auto-ignition diffusion combustion mode, and an operation condition is of high-load, and a combustion control execution unit that causes an operation in a combustion mode set by the combustion mode setting unit.

Because the multifuel internal combustion engine according to claim 1 can improve the fuel consumption performance and prevent the knocking in the high-load range in the compression auto-ignition diffusion combustion, increased torque and output can be realized in the high-load range. Further, the multifuel internal combustion engine can reduce the emission of NOx by performing the stoichiometric compression auto-ignition diffusion combustion. At the stoichiometric compression auto-ignition diffusion combustion, because a fuel with a good volatility is employed, emission of PM and smoke is also reduced.

Further, to achieve an object as described above, according to an aspect of the present invention as recited in claim 2, in the multifuel internal combustion engine according to claim 1, the combustion mode setting unit is configured to select a lean compression auto-ignition diffusion combustion mode when the ignitability index detected by the fuel property detecting unit is equal to or higher than an ignitability determination reference value satisfying a good ignitability suitable for the lean compression auto-ignition diffusion combustion mode, and to select a pre-mixed spark ignition flame propagation combustion mode when the ignitability index is lower than the ignitability determination reference value, in selecting a combustion mode other than the stoichiometric compression auto-ignition diffusion combustion mode.

Because the multifuel internal combustion engine according to claim 2 operates in the lean compression auto-ignition diffusion combustion mode as far as the fuel guided to the combustion chamber CC has a sufficient ignitability for the compression auto-ignition diffusion combustion even when the operation in the stoichiometric compression auto-ignition diffusion combustion mode is not possible, improved engine performance and fuel consumption performance, or prevention of degradation of these performances is allowed. When the fuel does not have a sufficient ignitability, the operation in the pre-mixed spark-ignition flame propagation combustion mode can realize stable combustion, secure the engine performance, and reduce the emission of PM, smoke, NOx, and unburned HC.

Further, to achieve an object as described above, according to an aspect of the present invention as recited in claim 3, in the multifuel internal combustion engine according to claim 1, the combustion mode setting unit is configured to select a lean compression auto-ignition diffusion combustion mode when the ignitability index detected by the fuel property detecting unit is equal to or higher than an ignitability determination reference value satisfying a good ignitability suitable for the lean compression auto-ignition diffusion combustion mode, to select a pre-mixed spark ignition flame propagation combustion mode when the ignitability index is lower than the ignitability determination reference value and the volatility index detected by the fuel property detecting unit is equal to or higher than a volatility determination reference value satisfying a good volatility suitable for the pre-mixed spark ignition flame propagation combustion mode, and to select a spark-assisted lean compression auto-ignition diffusion combustion mode when the ignitability index is lower than the ignitability determination reference value and the volatility index is lower than the volatility determination reference value, in selecting a combustion mode other than the stoichiometric compression auto-ignition diffusion combustion mode.

Because the multifuel internal combustion engine according to claim 3 operates in the lean compression auto-ignition diffusion combustion mode as far as the fuel guided to the combustion chamber CC has a sufficient ignitability for the compression auto-ignition diffusion combustion even when the operation in the stoichiometric compression auto-ignition diffusion combustion mode is not possible, improved engine performance and fuel consumption performance, or prevention of degradation of these performances can be realized similarly to claim 2. Further, the multifuel internal combustion engine can reduce the emission of NOx and the like by performing the pre-mixed spark ignition flame propagation combustion when the fuel has a good volatility even though the ignitability is bad, and can reduce the emission of NOx and the like and improve the engine performance and the fuel consumption performance by performing the lean compression auto-ignition diffusion combustion with the ignition assistance by the spark ignition when the fuel has a bad ignitability and a bad volatility.

Further, to achieve an object as described above, according to an aspect of the present invention as recited in claim 4, a multifuel internal combustion engine operating by guiding at least one type of fuel among at least two types of fuels with different properties to a combustion chamber, or by guiding a mixed fuel of the at least two types of fuels to the combustion chamber, includes a fuel property detecting unit that detects an ignitability index and a volatility index respectively found through indexation of an ignitability and a volatility of the fuel in the combustion chamber, a combustion mode setting unit that sets a combustion mode to a stoichiometric compression auto-ignition diffusion combustion mode when an operation condition is of high-load, and sets the combustion mode to a mode other than the stoichiometric compression auto-ignition diffusion combustion mode when the operation condition is of middle- to low-load, and a combustion control execution unit that causes an operation in the combustion mode set by the combustion mode setting unit, the combustion mode setting unit being configured to select a lean compression auto-ignition diffusion combustion mode when the ignitability index detected by the fuel property detecting unit is equal to or higher than an ignitability determination reference value satisfying a good ignitability suitable for the lean compression auto-ignition diffusion combustion mode, and to select a pre-mixed spark ignition flame propagation combustion mode when the ignitability index is lower than the ignitability determination reference value, in selecting a combustion mode other than the stoichiometric compression auto-ignition diffusion combustion mode.

The multifuel internal combustion engine according to claim 4 performs the stoichiometric compression auto-ignition diffusion combustion securely in the high-load range even when the ignitability of the fuel is bad in comparison with claim 1 described above. Therefore, the multifuel internal combustion engine can improve the engine performance such as an output, the fuel consumption performance, and the emission performance in the high-load range without being affected by the ignitability of the fuel. The multifuel internal combustion engine of claim 4 further provides a similar advantageous effect to that of claim 2.

Further, to achieve an object as described above, according to an aspect of the present invention as recited in claim 5, a multifuel internal combustion engine operating by guiding at least one type of fuel among at least two types of fuels with different properties to a combustion chamber, or by guiding a mixed fuel of the at least two types of fuels to the combustion chamber, includes a fuel property detecting unit that detects an ignitability index and a volatility index respectively found through indexation of an ignitability and a volatility of the fuel in the combustion chamber, a combustion mode setting unit that sets a combustion mode to a stoichiometric compression auto-ignition diffusion combustion mode when an operation condition is of high-load, and set the combustion mode to a mode other than the stoichiometric compression auto-ignition diffusion combustion mode when the operation condition is of middle- to low-load, and a combustion control execution unit that causes an operation in the combustion mode set by the combustion mode setting unit, the combustion mode setting unit being configured to select a lean compression auto-ignition diffusion combustion mode when the ignitability index detected by the fuel property detecting unit is equal to or higher than an ignitability determination reference value satisfying a good ignitability suitable for a lean compression auto-ignition diffusion combustion mode, to select a pre-mixed spark ignition flame propagation combustion mode when the ignitability index is lower than the ignitability determination reference value and the volatility index detected by the fuel property detecting unit is equal to or higher than a volatility determination reference value satisfying a good volatility suitable for the pre-mixed spark ignition flame propagation combustion mode, and to select a spark-assisted lean compression auto-ignition diffusion combustion mode when the ignitability index is lower than the ignitability determination reference value and the volatility index is lower than the volatility determination reference value, in selecting a combustion mode other than the stoichiometric compression auto-ignition diffusion combustion mode.

The multifuel internal combustion engine according to claim 5 performs the stoichiometric compression auto-ignition diffusion combustion securely in the high-load range even when the ignitability of the fuel is bad in comparison with claim 1 described above. Therefore, the multifuel internal combustion engine can improve the engine performance such as an output, the fuel consumption performance, and the emission performance in the high-load range without being affected by the ignitability of the fuel. The multifuel internal combustion engine of claim 5 further provides a similar advantageous effect to that of claim 3.

Further, to achieve an object as described above, according to an aspect of the present invention as recited in claim 6, in the multifuel internal combustion engine according to any one of claims 1 to 5, the combustion mode setting unit is configured to expand an operation range of the stoichiometric compression auto-ignition diffusion combustion mode in at least one of a direction of engine revolution and a direction of engine load as the ignitability and the volatility represented by the ignitability index and the volatility index detected by the fuel property detecting unit improve.

The multifuel internal combustion engine according to claim 6 can improve the emission of NOx and an acceleration performance during high-speed driving when the operation range of the stoichiometric compression auto-ignition diffusion combustion mode is expanded to a high revolution side, for example.

Further, to achieve an object as described above, according to an aspect of the present invention as recited in claim 7, a multifuel internal combustion engine operating by guiding at least one type of fuel among at least two types of fuels with different properties to a combustion chamber, or by guiding a mixed fuel of the at least two types of fuels to the combustion chamber, includes a fuel property detecting unit that detects a volatility index which is found through indexation of a volatility of the fuel in the combustion chamber, a combustion mode setting unit that sets a combustion mode to a spark-assisted stoichiometric compression auto-ignition diffusion combustion mode when the volatility index detected by the fuel property detecting unit is equal to or higher than a volatility determination reference value satisfying a good volatility suitable for the spark-assisted stoichiometric compression auto-ignition diffusion combustion mode, and an operation condition is of high-load, and a combustion control execution unit that causes an operation in the combustion mode set by the combustion mode setting unit.

The multifuel internal combustion engine according to claim 7 can perform the stoichiometric compression auto-ignition diffusion combustion by assisting the ignition with spark ignition even when the ignitability of the fuel is bad. Therefore, the multifuel internal combustion engine of claim 7 provides a similar advantageous effect to that of claim 1.

Further, to achieve an object as described above, according to an aspect of the present invention as recited in claim 8, in the multifuel internal combustion engine according to claim 7, the combustion mode setting unit is configured to select a lean compression auto-ignition diffusion combustion mode when the ignitability index detected by the fuel property detecting unit is equal to or higher than an ignitability determination reference value satisfying a good ignitability suitable for the lean compression auto-ignition diffusion combustion mode, and to select a pre-mixed spark ignition flame propagation combustion mode when the ignitability index is lower than the ignitability determination reference value, in selecting a combustion mode other than the spark-assisted stoichiometric compression auto-ignition diffusion combustion mode.

Because the multifuel internal combustion engine according to claim 8 operates in the lean compression auto-ignition diffusion combustion mode as far as the fuel guided to the combustion chamber CC has a sufficient ignitability for the compression auto-ignition diffusion combustion even when the operation in the spark-assisted stoichiometric compression auto-ignition diffusion combustion mode is not possible, improved engine performance and fuel consumption performance, or prevention of degradation of these performances is allowed similarly to claim 2. Further, the operation is carried out in the pre-mixed spark ignition flame propagation combustion mode similarly to claim 2 when the fuel does not have the sufficient ignitability, to realize stable combustion, secure the engine performance, and reduce the emission of PM, smoke, NOx, and unburned HC.

Further, to achieve an object as described above, according to an aspect of the present invention as recited in claim 9, in the multifuel internal combustion engine according to claim 7, the combustion mode setting unit is configured to select a lean compression auto-ignition diffusion combustion mode when the ignitability index detected by the fuel property detecting unit is equal to or higher than an ignitability determination reference value satisfying a good ignitability suitable for the lean compression auto-ignition diffusion combustion mode, to select a pre-mixed spark ignition flame propagation combustion mode when the ignitability index is lower than the ignitability determination reference value and the volatility index detected by the fuel property detecting unit is equal to or higher than a volatility determination reference value satisfying a good volatility suitable for the pre-mixed spark ignition flame propagation combustion mode, and to select a spark-assisted lean compression auto-ignition diffusion combustion mode when the ignitability index is lower than the ignitability determination reference value and the volatility index is lower than the volatility determination reference value, in selecting a combustion mode other than the spark-assisted stoichiometric compression auto-ignition diffusion combustion mode.

Because the multifuel internal combustion engine according to claim 9 operates in the lean compression auto-ignition diffusion combustion mode as far as the fuel guided to the combustion chamber CC has a sufficient ignitability for the compression auto-ignition diffusion combustion even when the operation in the spark-assisted stoichiometric compression auto-ignition diffusion combustion mode is not possible, improved engine performance and fuel consumption performance, or prevention of degradation of these performance is allowed. Further, the multifuel internal combustion engine can reduce the emission of NOx and the like by performing the pre-mixed spark-ignition flame propagation combustion if the fuel has a good volatility though the ignitability is bad, and reduce the emission of NOx and the like and improve the engine performance and the fuel consumption performance by performing the lean compression auto-ignition diffusion combustion with the ignition assistance by the spark ignition if the fuel has a bad ignitability and a bad volatility.

Further, to achieve an object as described above, according to an aspect of the present invention as recited in claim 10, a multifuel internal combustion engine operating by guiding at least one type of fuel among at least two types of fuels with different properties to a combustion chamber, or by guiding a mixed fuel of the at least two types of fuels to the combustion chamber, includes a fuel property detecting unit that detects an ignitability index and a volatility index respectively found through indexation of an ignitability and a volatility of the fuel in the combustion chamber, a combustion mode setting unit that sets a combustion mode to a spark-assisted stoichiometric compression auto-ignition diffusion combustion mode when an operation condition is of high-load and sets the combustion mode to a mode other than the spark-assisted stoichiometric compression auto-ignition diffusion combustion mode when the operation mode is of middle- to low-load, and a combustion control execution unit that causes an operation in the combustion mode set by the combustion mode setting unit, the combustion mode setting unit being configured to select a lean compression auto-ignition diffusion combustion mode when the ignitability index detected by the fuel property detecting unit is equal to or higher than an ignitability determination reference value satisfying a good ignitability suitable for the lean compression auto-ignition diffusion combustion mode, and to select a pre-mixed spark ignition flame propagation combustion mode when the ignitability index is lower than the ignitability determination reference value, in selecting a combustion mode other than the spark-assisted stoichiometric compression auto-ignition diffusion combustion mode.

The multifuel internal combustion engine according to claim 10 realizes the stoichiometric compression auto-ignition diffusion combustion by assisting the ignition by spark ignition though the fuel with a bad ignitability is difficult to make auto-ignite while the engine is cold, for example, immediately after the engine starts even in the high-load range, for example. Therefore, the multifuel internal combustion engine can improve the engine performance such as an output, the fuel consumption performance, and the emission performance in the high-load range more securely than claim 7. Further, the multifuel internal combustion engine provides a similar advantageous effect to that of claim 8.

Further, to achieve an object as described above, according to an aspect of the present invention as recited in claim 11, a multifuel internal combustion engine operating by guiding at least one type of fuel among at least two types of fuels with different properties to a combustion chamber, or by guiding a mixed fuel of the at least two types of fuels to the combustion chamber, includes a fuel property detecting unit that detects an ignitability index and a volatility index respectively found through indexation of an ignitability and a volatility of the fuel in the combustion chamber, a combustion mode setting unit that sets a combustion mode to a spark-assisted stoichiometric compression auto-ignition diffusion combustion mode when an operation condition is of high-load and sets the combustion mode to a mode other than the spark-assisted stoichiometric compression auto-ignition diffusion combustion mode when the operation condition is of middle- to low-load, and a combustion control execution unit that causes an operation in the combustion mode set by the combustion mode setting unit, the combustion mode setting unit being configured to select a lean compression auto-ignition diffusion combustion mode when the ignitability index detected by the fuel property detecting unit is equal to or higher than an ignitability determination reference value satisfying a good ignitability suitable for the lean compression auto-ignition diffusion combustion mode, to select a pre-mixed spark ignition flame propagation combustion mode when the ignitability index is lower than the ignitability determination reference value and the volatility index detected by the fuel property detecting unit is equal to or higher than a volatility determination reference value satisfying a good volatility suitable for the pre-mixed spark ignition flame propagation combustion mode, and to select a spark-assisted lean compression auto-ignition diffusion combustion mode when the ignitability index is lower than the ignitability determination reference value and the volatility index is lower than the volatility determination reference value, in selecting a combustion mode other than the spark-assisted stoichiometric compression auto-ignition diffusion combustion mode.

The multifuel internal combustion engine according to claim 11, similarly to claim 10, realizes the stoichiometric compression auto-ignition diffusion combustion in the high-load range by assisting the ignition of the fuel with a bad ignitability with spark ignition while the engine is cold, for example, immediately after the engine starts. Therefore, the multifuel internal combustion engine can improve the engine performance such as an output, the fuel consumption performance, and the emission performance in the high-load range more securely than claim 7. Further, the multifuel internal combustion engine provides a similar advantageous effect to that of claim 9.

Further, to achieve an object as described above, according to an aspect of the present invention as recited in claim 12, in the multifuel internal combustion engine according to any one of claims 7 to 11, the combustion mode setting unit is configured to expand an operation range of the spark-assisted stoichiometric compression auto-ignition diffusion combustion mode in at least one of a direction of engine revolution and a direction of engine load as the volatility represented by the volatility index detected by the fuel property detecting unit improves.

The multifuel internal combustion engine according to claim 12, similarly to claim 6, expands the operation range of the spark-assisted stoichiometric compression auto-ignition diffusion combustion mode, for example, to a high revolution side, whereby the improvement in emission of NOx and an acceleration performance during the high-speed driving is allowed.

EFFECT OF THE INVENTION

The multifuel internal combustion engine according to the present invention performs the stoichiometric compression auto-ignition diffusion combustion in the high-load range using the fuel with a good ignitability. Therefore, the multifuel internal combustion engine can improve the fuel consumption performance and achieve increased torque and output in the high-load range. Further, the multifuel internal combustion engine can reduce the emission of NOx and further reduce the emission of PM and smoke using the fuel with a good volatility. Therefore, the multifuel internal combustion engine can improve the engine performance, the fuel consumption performance, and the emission performance in the high-load range in a well-balanced manner.

BRIEF DESCRIPTION OF DRAWINGS

FIG. 1 is a diagram of a configuration of first to fourth embodiments of a multifuel internal combustion engine according to the present invention;
FIG. 2 is a graph of an example of combustion mode map data employed for setting a combustion mode;
FIG. 3 is a flowchart explaining a setting operation of the combustion mode in the multifuel internal combustion engine of the first embodiment;
FIG. 4 is a flowchart explaining a setting operation of the combustion mode in a multifuel internal combustion engine of the second embodiment;
FIG. 5 is a flowchart explaining an example of a setting operation of the combustion mode in a multifuel internal combustion engine of the third embodiment;
FIG. 6 is a flowchart explaining another example of the setting operation of the combustion mode in the multifuel internal combustion engine of the third embodiment;
FIG. 7 is a flowchart explaining an example of a setting operation of the combustion mode in a multifuel internal combustion engine of the fourth embodiment;
FIG. 8 is a flowchart explaining another example of the setting operation of the combustion mode in the multifuel internal combustion engine of the fourth embodiment;
FIG. 9 is a flowchart explaining still another example of the setting operation of the combustion mode in the multifuel internal combustion engine of the fourth embodiment;

FIG. 10 is a flowchart explaining still another example of the setting operation of the combustion mode in the multifuel internal combustion engine of the fourth embodiment; and

FIG. 11 is a diagram of a configuration of a modification of the multifuel internal combustion engine according to the present invention.

EXPLANATIONS OF LETTERS OR NUMERALS

| 1 | Electronic control unit |
|---|---|
| 16 | Crank-angle sensor |
| 23 | Air flow meter |
| 41A | First fuel tank |
| 41B | Second fuel tank |
| 71 | Ignition plug |
| 81 | Combustion-pressure sensor |
| 82 | Smoke sensor |
| CC | Combustion chamber |
| F1 | First fuel |
| F2 | Second fuel |
| Kl | Engine load |
| Kls1 | Lower-limit load in stoichiometric diffusion combustion range |
| Kls2 | Upper-limit load in stoichiometric diffusion combustion range |
| Kls3 | Lower-limit load in spark-assisted stoichiometric diffusion combustion range |
| Kls4 | Upper-limit load in spark-assisted stoichiometric diffusion combustion range |
| Ls1 | Lower-limit boundary line of stoichiometric diffusion combustion range |
| Ls2 | Upper-limit boundary line of stoichiometric diffusion combustion range |
| Ls3 | Lower-limit boundary line of spark-assisted stoichiometric diffusion combustion range |
| Ls4 | Upper-limit boundary line of spark-assisted stoichiometric diffusion combustion range |
| Ne | Number of engine revolutions |
| Pc | Ignitability index |
| Pc1, Pc2 | Ignitability determination reference value |
| Pv | Volatility index |
| Pv1, Pv2 | Volatility determination reference value |

BEST MODE(S) FOR CARRYING OUT THE INVENTION

Exemplary embodiments of a multifuel internal combustion engine according to the present invention are described in detail below with reference to the accompanying drawings. However, the present invention is not limited by the embodiments.

First Embodiment

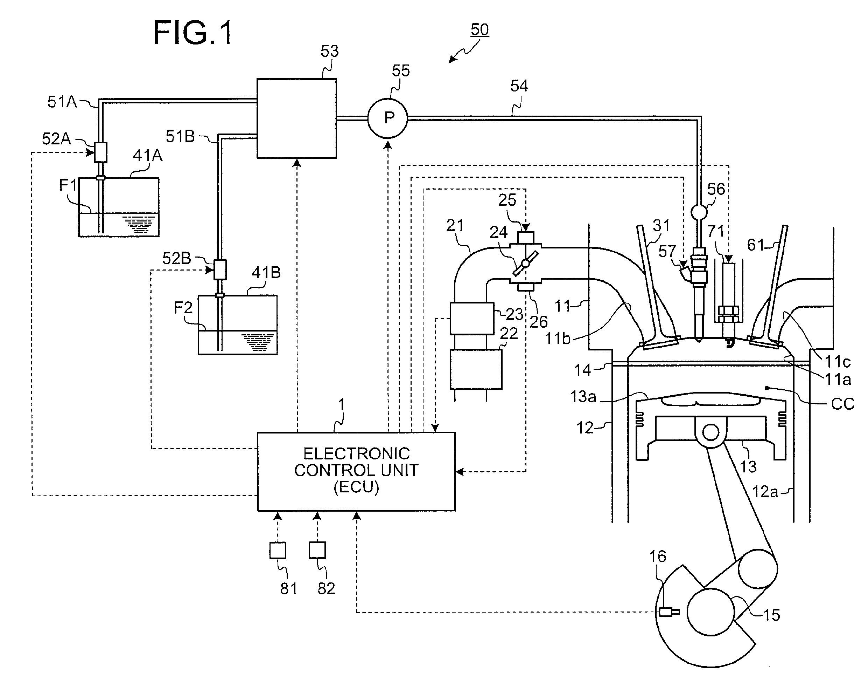

A first embodiment of the multifuel internal combustion engine according to the present invention is described with reference to FIGS. 1 to 3. The multifuel internal combustion engine is an internal combustion engine which operates by guiding at least one type of fuel among at least two types of fuels with different properties to a combustion chamber or by guiding a mixed fuel of the at least two types of fuels to the combustion chamber. In the first embodiment, the latter type of multifuel internal combustion engine is described as an example.

In the multifuel internal combustion engine, various kinds of control operations such as combustion control are executed by an electronic control unit (ECU) 1 shown in FIG. 1. The electronic control unit 1 is configured with a CPU (central processing unit), a ROM (read only memory) which stores therein predetermined control program and the like in advance, a RAM (random access memory) which temporarily stores a result of operation by the CPU, and a backup RAM which stores previously-prepared information and the like, each not shown, for example.

Firstly, a configuration of the multifuel internal combustion engine is described with reference to FIG. 1 as an example. In FIG. 1, only one cylinder is shown. The present invention, however, is not limited thereto, and is applicable to a multi-cylinder multifuel internal combustion engine. In the first embodiment, the engine is described as being provided with plural cylinders.

The multifuel internal combustion engine includes a cylinder head 11, a cylinder block 12, and a piston 13, and forms a combustion chamber CC therewith. The cylinder head 11 and the cylinder block 12 are coupled with each other via a head gasket 14 shown in FIG. 1 by a fastened bolt or the like. In a space formed by a concave portion 11a on the lower surface of the cylinder head 11 and a cylinder bore 12a of the cylinder block 12, the piston 13 is arranged in a reciprocable manner. The combustion chamber CC mentioned above is configured as a space enclosed by a wall surface of the concave portion 11a of the cylinder head 11, a wall surface of the cylinder bore 12a, and a top surface 13a of the piston 13.

The multifuel internal combustion engine of the first embodiment sends air and fuel into the combustion chamber CC according to an operation condition such as the number of engine revolutions and engine load, and a combustion mode, and performs combustion control corresponding to the operation condition and the like. The air is taken in from outside via an intake channel 21 and an intake port 11b of the cylinder head 11 shown in FIG. 1. On the other hand, the fuel is supplied by a fuel supply device 50 shown in FIG. 1.

Firstly, an air supply path is described. On the intake channel 21 of the first embodiment, an air cleaner 22 which removes foreign materials such as dust in the air from outside, and an air flow meter 23 which detects an amount of intake air from outside are arranged. In the multifuel internal combustion engine, detection signals from the air flow meter 23 are sent to the electronic control unit 1, which calculates the amount of intake air, the engine load, and the like based on the received detection signals.

Further, in a downstream side of the air flow meter 23 on the intake channel 21, a throttle valve 24 which adjusts an amount of air taken into the combustion chamber CC, and a throttle valve actuator 25 which drives the throttle valve 24 to open and close are arranged. The electronic control unit 1 of the first embodiment drive controls the throttle valve actuator 25 according to the operation condition and the combustion mode, and adjusts a valve-opening angle of the throttle valve 24 so that a valve-opening (in other words, amount of intake air) is set corresponding to the operation condition and the like. The throttle valve 24 is adjusted so that a necessary amount of air is taken into the combustion chamber CC, for example, to set an air-fuel ratio corresponding to the operation condition and the combustion mode. In the multifuel internal combustion engine, a throttle opening sensor 26 is provided to detect the valve opening of the throttle valve 24 and to transmit detection signals thereof to the electronic control unit 1.

Further, one end of the intake port 11b forms an opening in the combustion chamber CC, and an intake valve 31 for opening and closing the opening is arranged in the opening. The number of the openings can be one or more. The intake valve 31 is arranged one for each opening. In the multifuel internal combustion engine, air is taken into the combustion chamber CC via the intake port 11b when the intake valve 31 is open, whereas a flow of air into the combustion chamber CC is blocked when the intake valve 31 is closed.

One example of the intake valve 31 is driven to open and close according to rotation of an air-intake-side camshaft not shown and an elastic repulsive force of an elastic member (such as a helical spring). When this type of the intake valve 31 is employed, a power transmission mechanism configured with a chain, sprocket, and the like is arranged between the air-intake-side camshaft and a crankshaft 15, and the air-intake-side camshaft is interlinked with the rotation of the crankshaft 15, so that the intake valve 31 is driven to open and close at preset open/close time. The multifuel internal combustion engine of the first embodiment employs the intake valve 31 which is driven to open and close in synchronization with the rotation of the crankshaft 15.

The multifuel internal combustion engine may be provided with a variable valve mechanism such as a variable valve-timing & lifting mechanism that can change the opening/closing timing and the lifted amount of the intake valve 31, then, the opening/closing timing and the lifted amount of the intake valve 31 can be changed to a suitable level according to the operation condition and the combustion mode. Furthermore, the multifuel internal combustion engine may utilize an electromagnetic drive valve that drives the intake valve 31 to open and close utilizing an electromagnetic force so as to obtain a similar advantageous effect to that of the variable valve mechanism.

The fuel supply device 50 is described below. The fuel supply device 50 guides plural types of fuels with different properties to the combustion chamber CC. In the first embodiment, the fuel supply device 50 is configured so as to mix two types of fuels with different properties (first fuel F1 stored in a first fuel tank 41A and second fuel F2 stored in a second fuel tank 41B) at predetermined fuel mixture ratio, and to directly inject the mixed fuel into the combustion chamber CC.

Specifically, the fuel supply device 50 includes a first feed pump 52A which pumps up the first fuel F1 from the first fuel tank 41A to deliver to a first fuel channel 51A, a second feed pump 52B which pumps up the second fuel F2 from the second fuel tank 41B to deliver to a second fuel channel 51B, a fuel mixer 53 which mixes the first fuel F1 and the second fuel F2 respectively delivered through the first and the second fuel channels 51A and 51B, a high-pressure fuel pump 55 which pressurizes the mixed fuel generated by the fuel mixer 53 to deliver the mixed fuel to a high-pressure fuel channel 54 by pressure, a delivery channel 56 which distributes the mixed fuel from the high-pressure fuel channel 54 to each cylinder, and a fuel injection valve 57 provided for each cylinder to inject the mixed fuel supplied from the delivery channel 56 to the combustion chamber CC.

The fuel supply device 50 is configured so that the electronic control unit 1 drive controls the first feed pump 52A, the second feed pump 52B, and the fuel mixer 53 so that the fuel mixer 53 generates the mixed fuel of a predetermined fuel mixture ratio. For example, the fuel supply device 50 may adjust the fuel mixture ratio of the mixed fuel by making the electronic control unit 1 increase or decrease the discharge amount of each of the first feed pump 52A and the second feed pump 52B, or the fuel supply device 50 may adjust the fuel mixture ratio of the mixed fuel by making the fuel mixer 53 increase or decrease the mixture ratio of each of the first and the second fuels F1 and F2 according to an instruction by the electronic control unit 1. Here, the fuel mixture ratio may be a fixed value previously set, or a variable value which changes according to the operation condition or the combustion mode.

Further, the fuel supply device 50 is configured so that the electronic control unit 1 drive controls the high-pressure fuel pump 55 and the fuel injection valve 57 according to the operation condition and the combustion mode so that the generated mixed fuel is injected according to fuel injection conditions such as fuel injection amount, fuel injection timing, and fuel injection interval corresponding to the operation condition and the like. For example, the electronic control unit 1 makes the mixed fuel delivered through the high-pressure fuel pump 55 by pressure and makes the fuel injection valve 57 inject the mixed fuel based on the fuel injection conditions corresponding to the operation condition and the like.

The mixed fuel thus supplied to the combustion chamber CC, together with the air mentioned earlier, burns according to an ignition operation in an ignition mode corresponding to the combustion mode. Then, an in-cylinder gas after the combustion is discharged to an exhaust port 11c shown in FIG. 1 from the combustion chamber CC. In the exhaust port 11c, an exhaust valve 61 is arranged to open and close an opening leading to the combustion chamber CC. The number of the openings can be one or more, and the exhaust valve 61 is arranged for each of the openings. Hence, in the multifuel internal combustion engine, the in-cylinder gas after the combustion is discharged from the combustion chamber CC to the exhaust port 11c when the exhaust valve 61 is opened, whereas the discharge of the in-cylinder gas to the exhaust port 11c is blocked when the exhaust valve 61 is closed.

As the exhaust valve 61, various valves can be employed similarly to the intake valve 31 mentioned earlier. For example, one with a power transmission mechanism interposed, one provided with a variable valve mechanism such as a variable valve-timing & lifting mechanism, and an electromagnetic drive valve can be employed.

In the internal combustion engine, the combustion mode generally includes a diffusion combustion mode and a flame propagation combustion mode. As ignition modes corresponding respectively to the diffusion combustion mode and the flame propagation combustion mode, a compression auto-ignition mode and a pre-mixed spark ignition mode are set. In the following, these modes are referred to collectively as combustion mode, and each of which is referred to as a compression auto-ignition diffusion combustion mode and a pre-mixed spark ignition flame propagation combustion mode.

Firstly, the compression auto-ignition diffusion combustion mode is a mode of combustion according to which a highly-pressurized fuel is ejected into high-temperature compressed air generated in the combustion chamber CC, to induce auto-ignition of a part of the fuel, and the combustion advances along with the diffusive mixing of the fuel and the air. It is difficult to instantaneously mix the compressed air and the fuel in the combustion chamber CC, and therefore, an air-fuel ratio is not uniform immediately after the fuel ejection starts. On the other hand, for the diffusive combustion, the use of fuel with an excellent ignitability is generally preferable. Such a fuel with a good ignitability ignites by itself in a space where the air-fuel ratio is suitable for combustion before the ejection of planned amount of fuel finishes. Hence, in the compression auto-ignition diffusion combustion mode, the fuel in a space where the air-fuel ratio is suitable for combustion starts auto-ignition and generates flame which induces the combustion of the rest of the fuel and the air so as to make the combustion advance gradually.

The operation in the compression auto-ignition diffusion combustion mode usually requires fuel with a good ignitability whose ignition point is lower than compression heat of the compressed air. For example, light oil, dimethyl ether, and the like can be considered as the fuel with a good ignitability. Further, GTL (Gas To Liquids) fuel has recently been attracting attention as an alternative fuel for the light oil. The GTL fuel is easy to produce with a desired property. Hence, it is possible to use a generated GTL fuel with an enhanced ignitability as the fuel with a good ignitability. The fuel with a good ignitability allows the compression auto-ignition diffusion combustion, and further reduces the amount of NOx generated during the operation in the compression auto-ignition diffusion combustion mode and suppresses noises and vibrations at the time of combustion.

On the other hand, the pre-mixed spark ignition flame propagation combustion mode is a mode of combustion according to which the fuel and the air are pre-mixed to produce a pre-mixed air in the combustion chamber CC, a spark is produced in the pre-mixed air by the spark ignition, and the flame propagates from the spark to advance combustion. The pre-mixed spark ignition flame propagation combustion mode includes various combustion modes, for example, homogeneous combustion in which the homogeneously-mixed pre-mixed air is ignited, and stratified combustion in which high-concentration pre-mixed air, and a lean pre-mixed air are produced so that an ignition unit is surrounded by the high-concentration pre-mixed air and further surrounded by the lean pre-mixed air, so that the rich pre-mixed air is ignited.

As a suitable fuel for the pre-mixed spark ignition flame propagation combustion mode, fuel with a high volatility represented by gasoline can be generally considered. Here, the fuel with a high volatility is easily mixed with air, and hence, reduces excessively rich fuel region and contributes to suppress PM, smoke, NOx, and unburnt hydrocarbon (unburned HC). Other than gasoline, GTL fuel with a high-volatility property and dimethyl ether are known as a fuel with high volatility.

The multifuel internal combustion engine according to the first embodiment is configured so as to be operable in both of the combustion modes. Hence, in the multifuel internal combustion engine according to the first embodiment, an ignition plug 71 shown in FIG. 1 is arranged to spark ignite the pre-mixed air, so that the operation in the pre-mixed spark ignition flame propagation combustion mode is allowed. The ignition plug 71 realizes spark ignition according to an instruction from the electronic control unit 1 when an ignition timing corresponding to an operation condition of the pre-mixed spark ignition flame propagation combustion mode comes. Further, in the electronic control unit 1 of the first embodiment, a combustion mode setting unit is arranged to set the combustion mode.

Meanwhile, heat efficiency of the multifuel internal combustion engine increases when the compression ratio increases, and therefore, higher torque and output are achievable. In the multifuel internal combustion engine, however, the pre-mixed spark ignition flame propagation combustion in the high-load range which increases the compression ratio tends to induce knocking. Therefore, there is a limitation to the increase in the compression ratio and a significant increase in torque and output is difficult to realize. On the other hand, during the diffusion combustion, no anomalous combustion occurs, and therefore no knocking occurs. Therefore, in the high-load range, the operation in the compression auto-ignition diffusion combustion mode, which does not induce knocking, is desirable for the increase in torque and output. Further, the operation in the compression auto-ignition diffusion combustion mode has higher heat efficiency than the operation in the pre-mixed spark ignition flame propagation combustion mode. High heat efficiency enhances engine performance (output and torque), and is desirable also for improved fuel consumption performance. Hence, the multifuel internal combustion engine of the first embodiment operates in the compression auto-ignition diffusion combustion mode in the high-load range to improve the engine performance and fuel consumption performance.

In the low/middle-load range, the pre-mixed spark ignition flame propagation combustion does not cause knocking, and therefore, the operation in the pre-mixed spark ignition flame propagation combustion mode is possible in this range. On the other hand, in terms of heat efficiency which affects the engine performance and fuel consumption performance, the compression auto-ignition diffusion combustion mode is superior to the pre-mixed spark ignition flame propagation combustion mode as described above, and therefore, the operation in the compression auto-ignition diffusion combustion mode is still preferable under the operation condition of the low/middle-load range. However, similarly to the operation in the high-load range described above, the operation in the compression auto-ignition diffusion combustion mode requires a good ignitability of the fuel so that the fuel guided to the combustion chamber CC can undergo auto-ignition at least in the compressed air.

Hence, the multifuel internal combustion engine of the first embodiment operates in the pre-mixed spark ignition flame propagation combustion mode no matter whether the range is high-load range or the low/middle-load range when the fuel guided to the combustion chamber CC does not have a good ignitability suitable for the compression auto-ignition diffusion combustion, and operates in the compression auto-ignition diffusion combustion mode when the fuel has such a good ignitability.

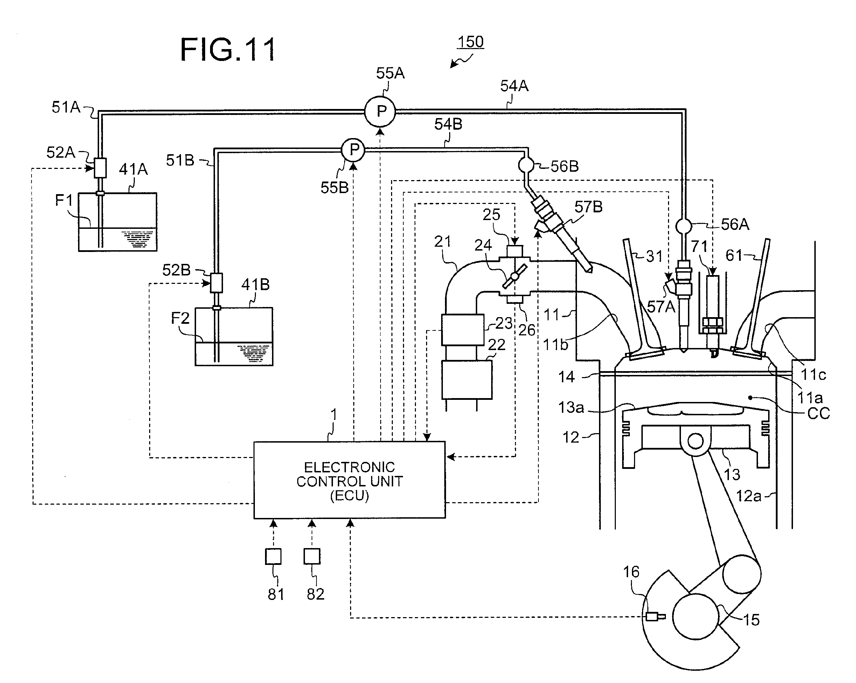

In the above, "fuel guided to the combustion chamber CC" means a mixed fuel when the configuration is like that of the multifuel internal combustion engine shown in FIG. 1 where the fuels F1 and F2 are mixed by the fuel mixer 53 and the resulting mixed fuel is delivered to the combustion chamber CC, and means a sum of the fuel F1 and the fuel F2 supplied to the combustion chamber CC when the configuration is like that of a multifuel internal combustion engine shown in FIG. 11 described later where each of the fuel F1 and the fuel F2 is supplied to the combustion chamber CC separately. For example, assume that a fuel with a good ignitability and a bad volatility (first fuel F1) is stored in the first fuel tank 41A, while a fuel with a bad ignitability and a good volatility (second fuel F2) is stored in the second fuel tank 41B. In this case, the property of the fuel guided to the combustion chamber CC is such that the fuel has a good ignitability and a bad volatility when only the first fuel F1 is supplied to the combustion chamber CC, while the fuel has a bad ignitability and a good volatility when only the second fuel F2 is supplied to the combustion chamber CC. Further, the property of the fuel guided to the combustion chamber CC changes depending on the fuel mixture ratio of the fuels F1 and F2. Therefore, the property of the fuel guided to the combustion chamber CC is such that the fuel has a good ignitability and a bad volatility when the fuel mixture ratio of the first fuel F1 is high, while the fuel has a bad ignitability and a good volatility when the fuel mixture ratio of the second fuel F2 is high.

For the enhancement of the fuel consumption performance (in other words, to reduce a fuel consumption rate), it is useful to make the air-fuel ratio in the combustion chamber CC closer to the theoretical air-fuel ratio than to the rich air-fuel ratio, or even closer to the lean air-fuel ratio than to the theoretical air-fuel ratio. Hence, when the fuel consumption performance is focused, it is preferable to set the air-fuel ratio in the combustion chamber CC to the lean air-fuel ratio and cause the compression auto-ignition diffusion combustion (hereinafter, "lean compression auto-ignition diffusion combustion) or the pre-mixed spark ignition flame propagation combustion (hereinafter, "lean pre-mixed spark ignition flame propagation combustion). The lean compression auto-ignition diffusion combustion in the high-load range usually increases the generation of NOx, which is not preferable.

Thus, in the first embodiment, the combustion mode setting unit of the electronic control unit 1 is configured so that the air-fuel ratio in the combustion chamber CC is the theoretical air-fuel ratio to cause the compression auto-ignition diffusion combustion (hereinafter "stoichiometric compression auto-ignition diffusion combustion") when the fuel guided to the combustion chamber CC has a better ignitability than a predetermined level under the operation condition of the high-load range. Thus, the engine performance, the fuel consumption performance, and the emission performance during the operation are improved in a well-balanced manner.

On the other hand, to ensure a good balance among the engine performance, the fuel consumption performance, and the emission performance during operations of other types, the combustion mode setting unit is configured so that the lean compression auto-ignition diffusion combustion mode is selected when the ignitability of the fuel guided to the combustion chamber CC is better than the predetermined level and the lean pre-mixed spark ignition flame propagation combustion mode is selected when the ignitability is bad. Among selectable combustion modes, a stoichiometric compression auto-ignition diffusion combustion mode may be selected in place of the lean compression auto-ignition diffusion combustion mode if it is suitable for the enhancement of all or at least one of the engine performance, the fuel consumption performance, and the emission performance. Further, the pre-mixed spark ignition flame propagation combustion mode under the theoretical air-fuel ratio (stoichiometric pre-mixed spark ignition flame propagation combustion mode) or the pre-mixed spark ignition flame propagation combustion mode under the rich air-fuel ratio (rich pre-mixed spark ignition flame propagation combustion mode) may be selected in place of the lean pre-mixed spark ignition flame propagation combustion mode.

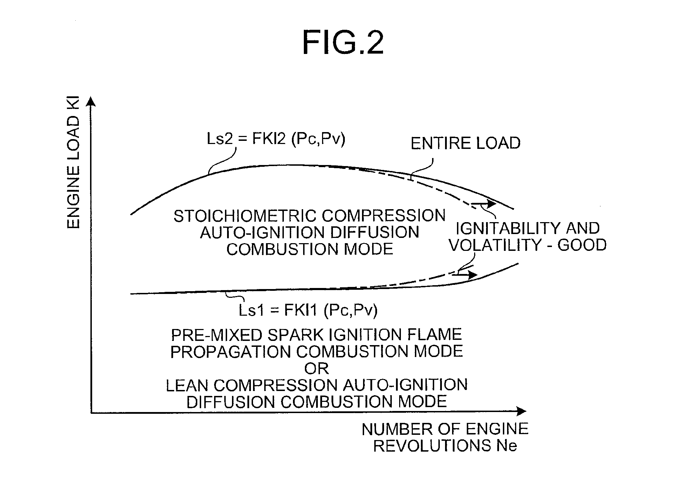

In the first embodiment, the good and bad of the ignitability and the volatility of the fuel guided to the combustion chamber CC is detected, and the combustion mode setting unit selects the combustion mode utilizing the result of detection and the combustion mode map data shown in FIG. 2, for example.

Firstly, indexes can be created for the ignitability and the volatility of the fuel, and the good and bad of the ignitability and the volatility may be represented by the indexes. In the first embodiment, the fuel property detecting unit is provided in the electronic control unit 1, to detect an index of the ignitability (hereinafter, "ignitability index") Pc and an index of the volatility (hereinafter "volatility index").

Specifically, cetane number of the fuel, an ignition lag at the diffusion combustion, and the like can be utilized as the ignitability index Pc. For example, the cetane number of the fuel can be known from the properties of the respective fuels F1 and F2 recognized by the fuel property detecting unit at the time of oil feed. In the first embodiment, however, the fuel F1 and the fuel F2 are mixed by the fuel mixer 53 at a predetermined fuel mixture ratio before the delivery to the combustion chamber CC. Therefore, a correct cetane number of the fuel (mixed fuel) guided to the combustion chamber CC cannot be known if not based on the consideration of the fuel mixture ratio. Hence, the fuel property detecting unit of the first embodiment calculates the cetane number of the fuel (mixed fuel) guided to the combustion chamber CC based on the cetane number of each of the fuel F1 and the fuel F2, and the fuel mixture ratio of the fuels F1 and F2. At the time of oil feed, the fuel property detecting unit may acquire the cetane number of each of the fuel F1 and the fuel F2 from an input device arranged on a vehicle so that a worker feeding the oil can input the properties of the fuels F1 and F2, or through the transmission of oil-feed information such as a type, a property, and an amount of fed oil from an oil-feed facility to respective communication device of a vehicle. On the other hand, the ignition lag at the diffusion combustion can be detected from a combustion-pressure sensor 81 shown in FIG. 1 at the time of diffusion combustion.

Further, an amount of smoke in an exhaust gas at the time of diffusion combustion can be utilized as the volatility index Pv. The amount of smoke is detected by a smoke sensor 82 shown in FIG. 1, for example.

To determine whether the fuel guided to the combustion chamber CC has a good ignitability and a good volatility suitable for the operation in the stoichiometric compression auto-ignition diffusion combustion mode or not, the ignitability index Pc and the volatility index Pv detected by the fuel property detecting unit are compared with respective predetermined thresholds which serve as a combustion-mode switching condition. For example, the ignitability index corresponding to a lower limit of the ignitability (i.e., minimum level of the ignitability) for realizing the stoichiometric compression auto-ignition diffusion combustion is set as a threshold for determining the ignitability (hereinafter, "first ignitability determination reference value") Pc1. Further, the volatility index corresponding to a lower limit of the volatility (i.e., minimum level of the volatility) for realizing the reduction in generated amount of PM and smoke at the time of stoichiometric compression auto-ignition diffusion combustion is set as a threshold for determining the volatility (hereinafter, "first volatility determination reference value") Pv1.

Further, when the fuel is not suitable for the stoichiometric compression auto-ignition diffusion combustion mode, the combustion mode is selected based on the ignitability of the fuel guided to the combustion chamber CC as a basis of determination as described above. Therefore, in this case, the ignitability index Pc detected by the fuel property detecting unit is compared with a predetermined threshold (hereinafter, "second ignitability determination reference value") Pc2 which is used as a condition for switching the combustion modes. As the second ignitability determination reference value Pc2, the ignitability index corresponding to a lower limit (i.e., minimum) of the ignitability for realizing the lean compression auto-ignition diffusion combustion is set, for example.

Strictly speaking, the first and the second ignitability determination reference values Pc1 and Pc2, and the first volatility determination reference value Pv1 each vary according to the number of engine revolutions Ne and the engine load Kl. Therefore, the first and the second ignitability determination reference values Pc1 and Pc2 and the first volatility determination reference value Pv1 are calculated based on functions (formulas (1) to (3) listed below) whose parameters are the number of engine revolutions Ne and the engine load Kl. The formulas (1) to (3) are found in advance based on results of experiments and simulation.

$$Pc1 = F1(Ne, Kl) \qquad (1)$$

$$Pc2 = F2(Ne, Kl) \qquad (2)$$

$$Pv1 = G1(Ne, Kl) \qquad (3)$$

The combustion mode map data mentioned earlier represents the operation condition (i.e., number of engine revolutions Ne and engine load Kl) and the operation range of the combustion mode according to the good and bad of the ignitability and the volatility of the fuel guided to the combustion chamber CC. In the combustion mode map data, boundary lines defining an operation range of the stoichiometric compression auto-ignition diffusion combustion mode (hereinafter, "stoichiometric diffusion combustion range") selected in the high-load range are shown. The boundary lines represent a limit of the engine load Kl corresponding to each number of engine revolutions Ne at which the operation in the stoichiometric compression auto-ignition diffusion combustion mode is possible. The boundary lines include a lower-limit boundary line Ls1 of the stoichiometric diffusion combustion range which represents a lower limit of the engine load Kl and an upper-limit boundary line Ls2 of the stoichiometric diffusion combustion range which represents an upper limit of the engine load Kl.

The stoichiometric diffusion combustion range fluctuates according to the good and bad of the ignitability and the volatility of the fuel guided to the combustion chamber CC. For example, when the ignitability and the volatility are further improved, the engine can be operated in a larger stoichiometric diffusion combustion range than a current range. Therefore, the lower-limit boundary line Ls1 of the stoichiometric diffusion combustion range and the upper-limit boundary line Ls2 of the stoichiometric diffusion combustion range can be represented by functions (formulas (4) and (5) shown below) whose parameters are the ignitability index Pc and the volatility index Pv of the fuel.

$$Ls1 = FKl1(Pc, Pv) \qquad (4)$$

$$Ls2 = FKl2(Pc, Pv) \qquad (5)$$

The formulas (4) and (5) expands the stoichiometric diffusion combustion range in a load direction, a revolution direction, or both when the ignitability and the volatility of the fuel currently guided to the combustion chamber CC is better than the ignitability and the volatility of the fuel with which the current stoichiometric diffusion combustion range is determined, and narrows the stoichiometric diffusion combustion range in the load direction, the revolution direction, or both if they are worse. The formulas (4) and (5) are found in advance based on results of experiments and simulation. For example, when the ignitability and the volatility of the fuel have become improved in comparison with previous values, the lower-limit boundary line Ls1 of the stoichiometric diffusion combustion range and the upper-limit boundary line Ls2 of the stoichiometric diffusion combustion range are corrected to a high revolution side as shown in FIG. 2, so that the stoichiometric diffusion combustion range expands towards the high revolution side. Thus, the improved acceleration performance and the reduced emission of NOx can be realized at the time of high-speed driving.

The combustion mode setting unit of the first embodiment determines whether the current operation condition (the number of engine revolutions Ne and the engine load Kl) corresponds to the stoichiometric compression auto-ignition diffusion combustion mode or not.

For example, the combustion mode setting unit can determine by finding the lower-limit boundary line Ls1 of the stoichiometric diffusion combustion range and the upper-limit boundary line Ls2 of the stoichiometric diffusion combustion range according to the ignitability and the volatility of the fuel as mentioned earlier (in other words, the stoichiometric diffusion combustion range on the combustion mode map data corresponding to the ignitability and the volatility of the fuel) and further determining whether the current operation condition falls within the stoichiometric diffusion combustion range. When such a manner of determination is adopted, if the current operation condition falls within the range, the combustion mode setting unit determines that the current operation condition corresponds to the stoichiometric compression auto-ignition diffusion combustion mode, whereas if the current operation condition does not fall within the range, the combustion mode setting unit determines that the current operation condition corresponds to a combustion mode other than the stoichiometric compression auto-ignition diffusion combustion mode.

On the other hand, the combustion mode setting unit of the first embodiment selects an optimal combustion mode taking into consideration the current operation condition (the number of engine revolutions Ne and the engine load Kl) and further the ignitability and the volatility of the fuel. Hence, one can say that the correction of the lower-limit boundary line Ls1 of the stoichiometric diffusion combustion range and the upper-limit boundary line Ls2 of the stoichiometric diffusion combustion range (i.e., the correction of the engine load Kl of every number of engine revolutions Ne on the lower-limit boundary line Ls1 of the stoichiometric diffusion combustion range and the upper-limit boundary line Ls2 of the stoichiometric diffusion combustion range) only takes time for arithmetic processing and not favorable. Hence, alternatively, the combustion mode setting unit can determine whether the current operation condition corresponds to the stoichiometric compression auto-ignition diffusion combustion mode or not using an engine load Kls1 on the lower-limit boundary line Ls1 of the stoichiometric diffusion combustion range (hereinafter, "stoichiometric diffusion combustion range lower-limit load") and an engine load Kls2 on the upper-limit boundary line Ls2 of the stoichiometric diffusion combustion range (hereinafter, "stoichiometric diffusion combustion range upper-limit load") corresponding to the current number of engine revolutions Ne and the ignitability and the volatility of the fuel.

The stoichiometric diffusion combustion range lower-limit load Kls1 and the stoichiometric diffusion combustion range upper-limit load Kls2 can be found based on formulas (6) and (7) in which the number of engine revolutions Ne is added as a parameter to the arithmetic formulas of the lower-limit boundary line Ls1 of the stoichiometric diffusion combustion range and the upper-limit boundary line Ls2 of the stoichiometric diffusion combustion range, respectively, and are calculated as corrected values corresponding to the ignitability and the volatility of the fuel. The stoichiometric diffusion combustion range lower-limit load Kls1 and the stoichiometric diffusion combustion range upper-limit load Kls2 serve as further combustion-mode-switching conditions employed for determining whether the current operation condition corresponds to the stoichiometric compression auto-ignition diffusion combustion mode or not.

$$Kls1 = FKl1(Ne,Pc,Pv) \qquad (6)$$

$$Kls2 = FKl2(Ne,Pc,Pv) \qquad (7)$$

In the first embodiment, a technique of determination using the stoichiometric diffusion combustion range lower-limit load Kls1 and the stoichiometric diffusion combustion range upper-limit load Kls2 is described below by way of example.

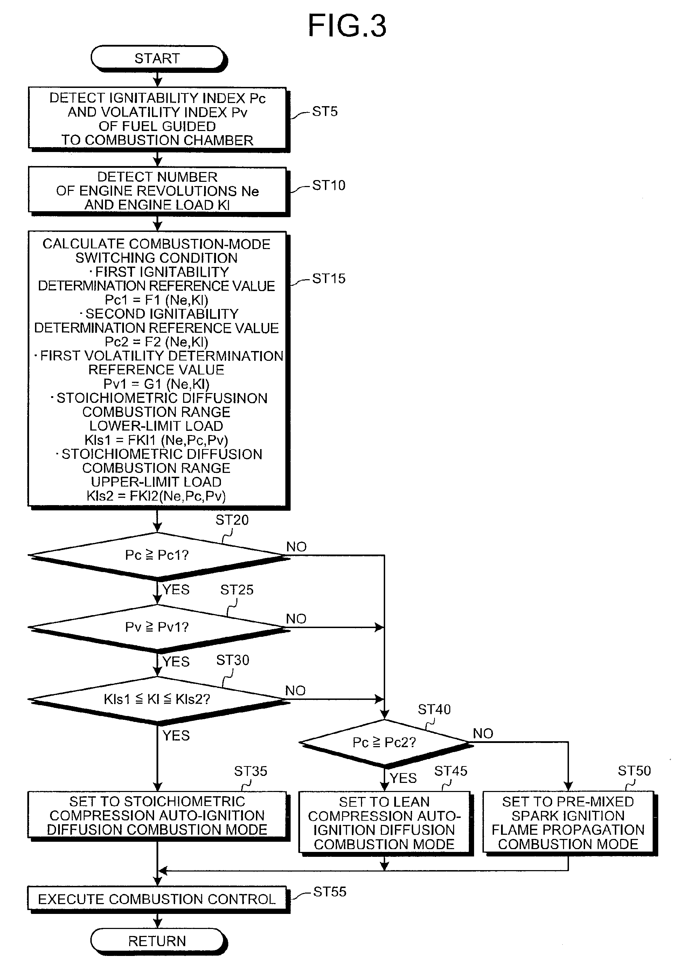

An example of a control operation of the electronic control unit 1 according to the first embodiment is described below with reference to a flowchart of FIG. 3.

Firstly, the electronic control unit 1 of the first embodiment detects the ignitability index Pc and the volatility index Pv of the fuel guided to the combustion chamber CC by the fuel property detecting unit as mentioned earlier (step ST5), and further detects the number of engine revolutions Ne and the engine load Kl of the multifuel internal combustion engine (step ST10). The number of engine revolutions Ne can be acquired from detection signals of a crank-angle sensor 16 shown in FIG. 1. The crank-angle sensor 16 detects an angle of rotation of the crankshaft 15. The engine load Kl can be acquired from detection signals of the air flow meter 23 mentioned earlier.

The combustion mode setting unit of the electronic control unit 1 substitutes the ignitability index Pc, the volatility index Pv, the number of engine revolutions Ne, and the engine load Kl detected in steps ST5 and 10 into the formulas 1, 2, 3, 6, and 7 mentioned above to calculate the combustion-mode switching condition (i.e., first ignitability determination reference value Pc1, second ignitability determination reference value Pc2, first volatility determination reference value Pv1, stoichiometric diffusion combustion range lower-limit load Kls1, and stoichiometric diffusion combustion range upper-limit load Kls2) (step ST15).

Subsequently, the combustion mode setting unit determines whether the detected ignitability index Pc and the volatility index Pv respectively represent a good ignitability and a good volatility suitable for the operation in the stoichiometric compression auto-ignition diffusion combustion mode or not (i.e., Pc≥Pc1?, and Pv≥Pv1?) (steps ST20 and ST25).

When the ignitability index Pc is equal to or higher than the first ignitability determination reference value Pc1 and the volatility index Pv is equal to or higher than the first volatility determination reference value Pv1 as a result of determination in steps ST20 and ST25, the combustion mode setting unit determines whether a corresponding combustion mode is the stoichiometric compression auto-ignition diffusion combustion mode or not (Kls1≤Kl≤Kls2?) (step ST30).

The combustion mode setting unit sets the stoichiometric compression auto-ignition diffusion combustion mode as the combustion mode if, in step ST20, the engine load Kl detected in step ST10 is equal to or higher than the stoichiometric diffusion combustion range lower-limit load Kls1 and equal to or lower than the stoichiometric diffusion combustion range upper-limit load Kls2 (in other words, the number of engine revolutions Ne and the engine load Kl as detected indicate the stoichiometric diffusion combustion range on the combustion mode map data) (step ST35).

On the other hand, when the ignitability index Pc is lower than the first ignitability determination reference value Pc1 in step ST20 (i.e., when the fuel guided to the combustion chamber CC does not have an ignitability suitable for the operation in the stoichiometric compression auto-ignition diffusion combustion mode), or when the volatility index Pv is lower than the first volatility determination reference value Pv1 in step ST25 (in other words, when the fuel guided to the combustion chamber CC does not have a volatility suitable for the operation in the stoichiometric compression auto-ignition diffusion combustion mode), or when the engine load Kl is lower than the stoichiometric diffusion combustion range lower-limit load Kls1 or higher than the stoichiometric diffusion combustion range upper-limit load Kls2 in step ST30 (in other words, when the combustion mode is determined to be one other than the stoichiometric compression auto-ignition diffusion combustion mode), the combustion mode setting unit selects a combustion mode other than the stoichiometric compression auto-ignition diffusion combustion mode.

For example, the combustion mode setting unit of the first embodiment determines whether the ignitability index Pc detected in step ST5 mentioned above represents a good ignitability suitable for the operation in the lean compression auto-ignition diffusion combustion mode or not (Pc≥Pc2?) (step ST40).

On determining that the ignitability index Pc is equal to or higher than the second ignitability determination reference value Pc2 in step ST40 (in other words, that the fuel guided to the combustion chamber CC has a good ignitability suitable for the operation in the lean compression auto-ignition diffusion combustion mode), the combustion mode setting unit sets the lean compression auto-ignition diffusion combustion mode as a combustion mode (step ST45), whereas on determining that the ignitability index Pc is lower than the second ignitability determination reference value Pc2 (in other words, that the fuel guided to the combustion chamber CC does not have an ignitability suitable for the operation in the lean compression auto-ignition diffusion combustion mode), the combustion mode setting unit sets the pre-mixed spark ignition flame propagation combustion mode as the combustion mode (step ST50).

A combustion control execution unit of the electronic control unit 1 of the first embodiment executes combustion control to make the engine operate in the combustion mode set as described above (step ST55).

In the multifuel internal combustion engine of the first embodiment, the stoichiometric compression auto-ignition diffusion combustion mode is selected as the combustion mode when the operation condition is of the high-load range and the fuel guided to the combustion chamber CC has a predetermined good ignitability and a predetermined good volatility. Hence, the multifuel internal combustion engine can reduce the emission of NOx in the high-load range. Further, since the multifuel internal combustion engine performs the stoichiometric compression auto-ignition diffusion combustion in the high-load range when the fuel has a good volatility, the mixed state of the fuel and the compressed air becomes uniform, and further, the decrease in temperature and pressure in the combustion chamber CC can be prevented in a diffusion combustion period and an afterburning period. Thus, the imperfect combustion can be suppressed and the emission of PM and smoke can also be reduced. Further, the multifuel internal combustion engine can improve the engine performance such as an output and the fuel consumption performance and further suppress the knocking in the high-load range, by operating in the stoichiometric compression auto-ignition diffusion combustion mode which realizes a high heat efficiency, whereby the increase in torque and output in the high-load range can be realized.

On the other hand, the multifuel internal combustion engine selects a combustion mode other than the stoichiometric compression auto-ignition diffusion combustion mode according to the ignitability of the fuel when the operation condition and the fuel property do not fall within the above range. For example, in the example described earlier, when the fuel guided to the combustion chamber CC has a predetermined good ignitability, the lean compression auto-ignition diffusion combustion mode is selected, whereas when the fuel does not have such a good ignitability, the pre-mixed spark ignition flame propagation combustion mode is selected. Hence, the multifuel internal combustion engine operates in the lean compression auto-ignition diffusion combustion mode as far as the fuel guided to the combustion chamber CC has a sufficient ignitability for realizing the compression auto-ignition diffusion combustion, even when the operation in the stoichiometric compression auto-ignition diffusion combustion mode is not possible. Thus, the improvement in engine performance and fuel consumption performance, and the prevention of degradation of these performances can be realized. Further, when the fuel does not have such an ignitability, the multifuel internal combustion engine operates in the pre-mixed spark ignition flame propagation combustion mode so as to realize stable combustion and secure the engine performance, and further to reduce the emission of PM, smoke, NOx, and unburned HC.

As can be seen from above, the multifuel internal combustion engine of the first embodiment can stabilize the combustion in accordance with the operation condition (i.e., number of engine revolutions Ne and the engine load KI) and further in accordance with the property of the fuel guided to the combustion chamber CC (such as the ignitability and the volatility), and secure the optimal engine performance, emission performance, and fuel consumption performance corresponding to the operation condition and the fuel property.

Second Embodiment

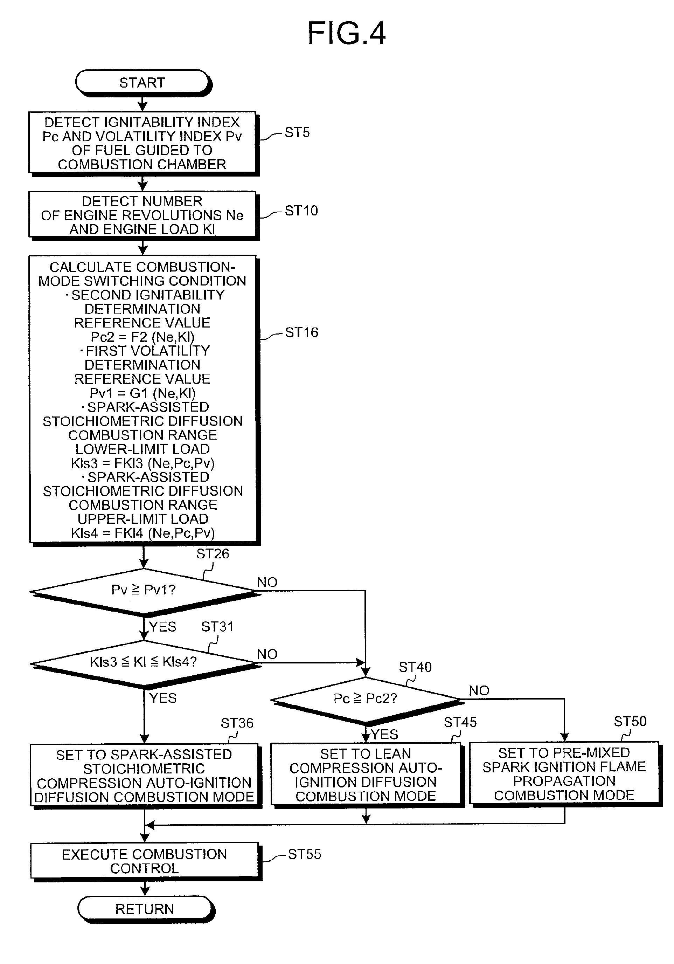

A multifuel internal combustion engine according to a second embodiment of the present invention is described with reference to FIG. 4.

The stoichiometric compression auto-ignition diffusion combustion mode in the first embodiment described above is a suitable combustion mode to increase torque and output in the high-load range, and to improve the emission performance and the fuel consumption performance. To realize the operation in the stoichiometric compression auto-ignition diffusion combustion mode, the fuel delivered to the combustion chamber CC must be automatically ignited in the compressed air. Hence, in the first embodiment, the stoichiometric compression auto-ignition diffusion combustion mode is selected in the high-load range when the fuel has a good ignitability. On the other hand, the multifuel internal combustion engine of the first embodiment includes the ignition plug 71 to allow forcible ignition. Therefore, the multifuel internal combustion engine can assist the ignition by spark ignition by the ignition plug 71 when the fuel has a bad ignitability. Thus, the multifuel internal combustion engine provided with the ignition plug 71 can cause the stoichiometric compression auto-ignition diffusion combustion by assisting the ignition by the spark ignition by the spark plug 71 (hereinafter, "spark-assisted stoichiometric compression auto-ignition diffusion combustion") even when the fuel has a bad ignitability.

In the second embodiment, the combustion mode setting unit sets a spark-assisted stoichiometric compression auto-ignition diffusion combustion mode instead of the stoichiometric compression auto-ignition diffusion combustion mode of the first embodiment to realize increased torque and output in the high-load range. Specifically, the combustion mode is set to the spark-assisted stoichiometric compression auto-ignition diffusion combustion mode regardless of the good and bad of the ignitability of the fuel guided to the combustion chamber CC when the fuel has a good volatility suitable for the operation in the spark-assisted stoichiometric compression auto-ignition diffusion combustion mode, and the operation condition (i.e., number of engine revolutions Ne and engine load KI) matches the operation range of the spark-assisted stoichiometric compression auto-ignition diffusion combustion mode (hereinafter, "spark-assisted stoichiometric diffusion combustion range").

For example, the multifuel internal combustion engine of the second embodiment is a multifuel internal combustion engine with a similar configuration to that of the first embodiment described above and in which the combustion mode setting unit and the combustion control execution unit of the electronic control unit 1 are changed so as to execute the operation in the spark-assisted stoichiometric compression diffusion combustion mode.

In the second embodiment, for the convenience, the second ignitability determination reference value Pc2 and the first volatility determination reference value Pv1 are found based on the formulas 2 and 3 which are the same with those in the first embodiment. As the first volatility determination reference value Pv1, the volatility index corresponding to a lower-limit (i.e., minimum) volatility for allowing the reduction of generated amount of PM and smoke at the spark-assisted stoichiometric compression auto-ignition diffusion combustion is set.

For the convenience, a combustion mode map data of the second embodiment is data formed by replacing the stoichiometric diffusion combustion range of the combustion mode map data of FIG. 2 with a spark-assisted stoichiometric diffusion combustion range. The lower-limit boundary line Ls1 of the stoichiometric diffusion combustion range and the upper-limit boundary line Ls2 of the stoichiometric diffusion combustion range represented by the formulas 4 and 5 on the combustion mode map data of FIG. 2, are read as a lower-limit boundary line Ls3 of the spark-assisted stoichiometric diffusion combustion range and an upper-limit boundary line Ls4 of the spark-assisted stoichiometric diffusion combustion range represented by following formulas (8) and (9).

$$Ls3 = FKl3(Pc, Pv) \qquad (8)$$

$$Ls4 = FKl4(Pc, Pv) \qquad (9)$$

Hence, in the second embodiment, the lower-limit boundary line Ls3 of the spark-assisted stoichiometric diffusion combustion range and the upper-limit boundary line Ls4 of the spark-assisted stoichiometric diffusion combustion range are corrected according to the ignitability index Pc and the volatility index Pv of the fuel guided to the combustion chamber CC. When the ignitability and the volatility of the fuel have improved in comparison with the current properties, the spark-assisted stoichiometric diffusion combustion range may be expanded, whereas when the ignitability and the volatility become worse, the spark-assisted stoichiometric diffusion combustion range may be reduced. Alternatively, a spark-assisted stoichiometric diffusion combustion range lower-limit load Kls3 and a spark-assisted stoichiometric diffusion combustion range upper-limit load Kls4 similar to the stoichiometric diffusion combustion range lower-limit load Kls1 and the stoichiometric diffusion combustion range upper-limit load Kls2 of the first embodiment may be employed. The spark-assisted stoichiometric diffusion combustion range lower-limit load Kls3 and the spark-assisted stoichiometric diffusion combustion range upper-limit load Kls4 are calculated based on following formulas (10) and (11) similarly to the stoichiometric diffusion combustion range lower-limit load Kls1 and the stoichiometric diffusion combustion range upper-limit load Kls2.

$$Kls3 = FKl3(Ne,Pc,Pv) \qquad (10)$$

$$Kls3 = FKl3(Ne,Pc,Pv) \qquad (11)$$

An example of a control operation of the electronic control unit 1 of the second embodiment is described below with reference to a flowchart of FIG. 4.

Firstly, the fuel property detecting unit of the electronic control unit 1 of the second embodiment, similarly to that of the first embodiment, detects the ignitability index Pc and the volatility index Pv of the fuel guided to the combustion chamber CC and the number of engine revolutions Ne and the engine load Kl of the multifuel internal combustion engine (steps ST5, ST10).

Then, the combustion mode setting unit of the electronic control unit 1 substitutes the ignitability index Pc, the volatility index Pv, the number of engine revolutions Ne, and the engine load Kl detected in steps ST5 and ST10 into the formulas 2, 3, 6, and 7 mentioned earlier to calculate the combustion-mode switching condition (i.e., second ignitability determination reference value Pc2, first volatility determination reference value Pv1, spark-assisted stoichiometric diffusion combustion range lower-limit load Kls3, and spark-assisted stoichiometric diffusion combustion range upper-limit load Kls4) (step ST16).

Subsequently, the combustion mode setting unit determines whether the detected volatility index Pv represents a good volatility suitable for the operation in the spark-assisted stoichiometric compression auto-ignition diffusion combustion mode (Pv≥Pv1?) or not (step ST26). When the volatility index Pv is equal to or higher than the first volatility determination reference value Pv1 as a result, the combustion mode setting unit determines whether the corresponding combustion mode is the spark-assisted stoichiometric compression auto-ignition diffusion combustion mode or not (Kls3≤Kl<_Kls4?) (step ST31).

When the engine load Kl detected in step ST10 mentioned above is equal to or higher than the spark-assisted stoichiometric diffusion combustion range lower-limit load Kls3 and equal to or lower than the spark-assisted stoichiometric diffusion combustion range upper-limit load Kls4 (in other words, when the number of engine revolutions Ne and the engine load Kl as detected indicates the spark-assisted stoichiometric diffusion combustion range on the combustion mode map data), the combustion mode setting unit sets the spark-assisted stoichiometric compression auto-ignition diffusion combustion mode as the combustion mode (step ST36).

On the other hand, when the volatility index Pv is lower than the first volatility determination reference value Pv1 in step ST26 (in other words, when the fuel guided to the combustion chamber CC does not have a volatility suitable for the operation in the spark-assisted stoichiometric compression auto-ignition diffusion combustion mode), or when the engine load Kl is lower than the spark-assisted stoichiometric diffusion combustion range lower-limit load Kls3 or higher than the spark-assisted stoichiometric diffusion combustion range upper-limit load Kls4 in step ST31 (in other words, when the combustion mode is determined to be one other than the spark-assisted stoichiometric compression auto-ignition diffusion combustion mode), the combustion mode setting unit selects a combustion mode other than the spark-assisted stoichiometric compression auto-ignition diffusion combustion mode.

Similarly to the first embodiment, the combustion mode setting unit determines whether the ignitability index Pc detected in step ST5 is equal to or higher than the second ignitability determination reference value Pc2 or not (step ST40), and when the result is YES in step ST40, the combustion mode setting unit sets the lean compression auto-ignition diffusion combustion mode (step ST45), whereas when the result is NO in step ST40, the combustion mode setting unit sets the pre-mixed spark ignition flame propagation combustion mode (step ST50).

The combustion control execution unit of the electronic control unit 1 of the second embodiment executes the combustion control so as to operate the engine in the combustion mode set as described above (step ST55).

As can be seen from the above, the multifuel internal combustion engine of the second embodiment selects the spark-assisted stoichiometric compression auto-ignition diffusion combustion mode as the combustion mode regardless of the good and bad of the ignitability of the fuel when the operation condition is in the high-load range and the fuel guided to the combustion chamber CC has a predetermined good volatility. Therefore, the multifuel internal combustion engine can realize the stoichiometric compression auto-ignition diffusion combustion in the theoretical air-fuel ratio in the high-load range without being affected by the good and bad of the ignitability of the fuel, whereby the emission of NOx in the high-load range can be reduced. Further, the multifuel internal combustion engine performs the stoichiometric compression auto-ignition diffusion combustion in the high-load range with the assistance of the spark ignition when the fuel has a good volatility, whereby the emission of PM and smoke can be reduced similarly to the first embodiment. Further, since the spark-assisted stoichiometric compression auto-ignition diffusion combustion mode has high heat efficiency, the engine performance such as an output and the fuel consumption performance in the high-load range can be improved. Further, since no knocking occurs, the increased torque and output can be realized in the high-load range.

On the other hand, the multifuel internal combustion engine selects the same combustion mode as that in the first embodiment according to the ignitability of the fuel when the operation condition and fuel property are other than those described above. Hence, in such case, similarly to the first embodiment, the engine performance, the emission performance, and the fuel consumption performance are improved.

As can be seen from above, the multifuel internal combustion engine of the second embodiment can similarly stabilize the combustion in accordance with the operation condition (i.e., number of engine revolutions Ne and the engine load Kl) and further in accordance with the property of the fuel guided to the combustion chamber CC (such as the ignitability and the volatility), and secure the optimal engine performance, emission performance, and fuel consumption performance corresponding to the operation condition and the fuel property. Further, the multifuel internal combustion engine of the second embodiment can perform the stoichiometric compression auto-ignition diffusion combustion in the high-load range with the assistance of spark ignition even when the fuel has a bad ignitability. Thus, the improvement in the engine performance, the emission performance, and the fuel consumption performance can be achieved in the high-load range with a wider range of fuels (i.e., options) in comparison with those employable in the multifuel internal combustion engine of the first embodiment.

Third Embodiment

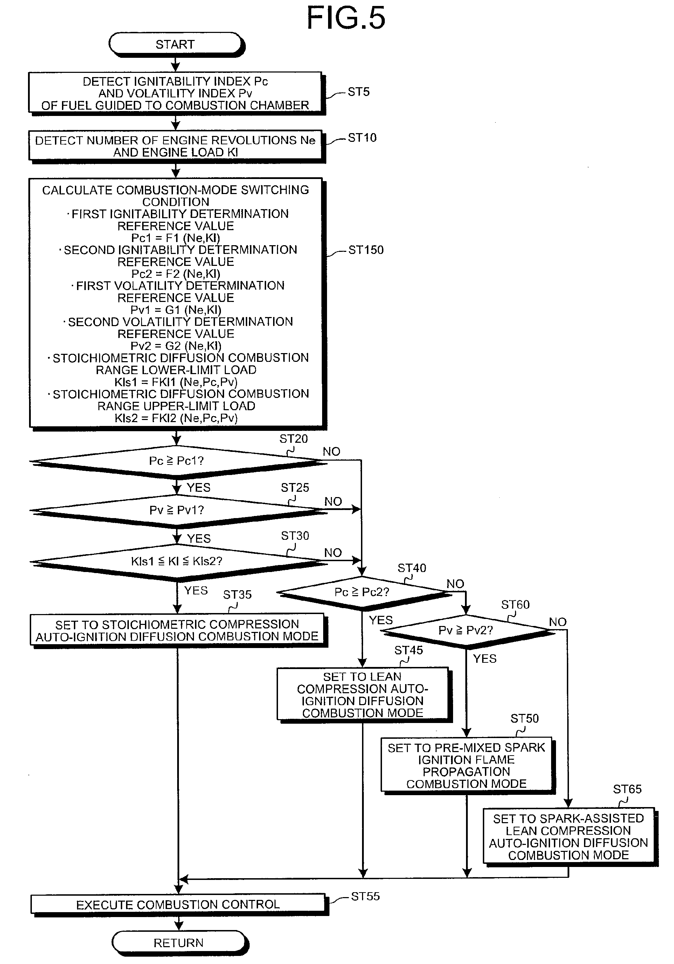

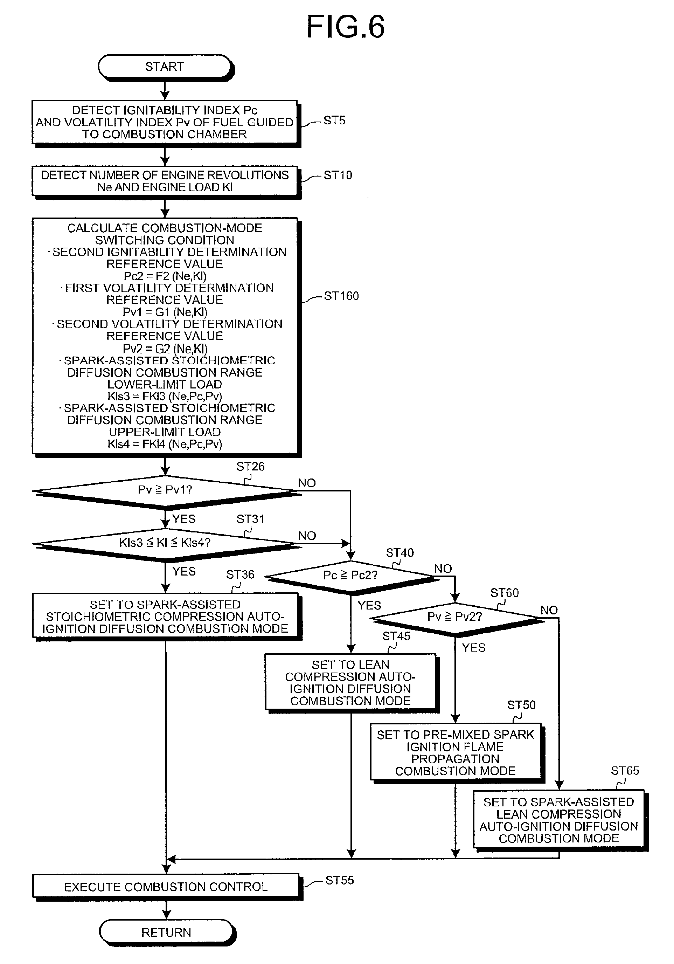

A multifuel internal combustion engine according to a third embodiment of the present invention is described with reference to FIGS. 5 and 6.

In the multifuel internal combustion engines of the first and the second embodiments described above, the combustion mode is set to the pre-mixed spark ignition flame propagation combustion mode when the ignitability index Pc of the fuel guided to the combustion chamber CC is lower than the second ignitability determination reference value Pc2 (NO in step ST40). However, the fuel guided to the combustion chamber CC at this time does not necessarily have a good volatility. The operation in the pre-mixed spark ignition flame propagation combustion mode with the fuel of a bad volatility can increase the over-rich range of the fuel which is difficult to mix with the air, and may increase the emission of PM, smoke, NOx, and unburned HC. On the other hand, the fuel guided to the combustion chamber CC at the time does not have a good ignitability sufficient for the auto ignition in the compressed air. The multifuel internal combustion engines of the first and the second embodiments, however, are provided with the ignition plug 71 which can assist the ignition of the fuel whose ignitability is not good.

Therefore, when the ignitability index Pc of the fuel guided to the combustion chamber CC is lower than the second ignitability determination reference value Pc2 as described above, it is preferable to determine the good and bad of the volatility of the fuel again, and to select another combustion mode according to the result of determination. Specifically, when the fuel has a bad ignitability though the volatility is good, the fuel is easily mixed with the air and the over-rich range of the fuel decreases. Therefore, the engine is operated in the pre-mixed spark ignition flame propagation combustion mode to stabilize the combustion and to suppress the emission of PM, smoke, NOx, and unburned HC. On the other hand, when the fuel does not have neither a good ignitability nor a good volatility, the lean compression auto-ignition diffusion combustion is performed with the ignition assistance from the ignition plug 71 (hereinafter, "spark-assisted lean compression auto-ignition diffusion combustion"), to stabilize the combustion, and to improve the engine performance, the fuel consumption performance, and the emission performance.

When the volatility of the fuel is determined again, the volatility index Pv is compared with the second volatility determination reference value Pv2 which serves as a switching condition of the combustion mode. As the second volatility determination reference value Pv2, the volatility index corresponding to a lower-limit (i.e., minimum) volatility for allowing the suppression of emission of NOx and the like at the time of pre-mixed spark ignition flame propagation combustion, for example, is set. Similarly to the first volatility determination reference value Pv1, the second volatility determination reference value Pv2 is calculated based on a function (formula (12) below) whose parameters are the number of engine revolutions Ne and the engine load Kl. The formula (8) is found in advance based on the result of experiment and simulation.

$$Pv2 = G2(Ne, Kl) \qquad (12)$$

A multifuel internal combustion engine configured with changes to the electronic control unit 1 (the combustion mode setting unit and the combustion control execution unit) of the first embodiment according to the third embodiment is described with reference to a flowchart of FIG. 5, and a multifuel internal combustion engine configured with changes to the electronic control unit 1 (combustion mode setting unit and the combustion control execution unit) of the second embodiment according to the third embodiment is described with reference to a flowchart of FIG. 6. Processing operations of the electronic control unit 1 of the third embodiment is mostly the same with those of the first and the second embodiments (see flowcharts of FIGS. 3 and 4), and only the difference is described below.

In calculating the combustion-mode switching condition, the combustion mode setting unit of the electronic control unit 1 of the third embodiment calculates the second volatility determination reference value Pv2 by substituting the number of engine revolutions Ne and the engine load Kl detected in step ST5 into the formula (12), in addition to the combustion-mode switching conditions found respectively in the first and the second embodiments (step ST150 or step ST160).

On determining that the ignitability index Pc is lower than the second ignitability determination reference value Pc2 in step ST40, the combustion mode setting unit determines whether the volatility index Pv detected in step ST5 represents a good volatility suitable for the operation in the pre-mixed spark ignition flame propagation combustion mode (Pv≥Pv2?) (step ST60).

On determining that the volatility index Pv is equal to or higher than the second volatility determination reference value Pv2 (in other words, on determining that the fuel guided to the combustion chamber CC has a good volatility suitable for the operation in the pre-mixed spark ignition flame propagation combustion mode), the combustion mode setting unit sets the pre-mixed spark ignition flame propagation combustion mode as the combustion mode (step ST50). On the other hand, on determining that the volatility index Pv is lower than the second volatility determination reference value Pv2 (in other words, on determining that the fuel guided to the combustion chamber CC does not have a volatility suitable for the operation in the pre-mixed spark ignition flame propagation combustion mode), the combustion mode setting unit sets the spark-assisted lean compression auto-ignition diffusion combustion mode as the combustion mode (step ST65).

Thereafter, the combustion control execution unit of the electronic control unit 1 of the first embodiment executes the combustion control so as to operate the engine in the combustion mode set in one of steps ST35, ST45, ST50, and ST65 (step ST55).

When the stoichiometric compression auto-ignition diffusion combustion mode and the spark-assisted stoichiometric compression auto-ignition diffusion combustion mode are not selected in the multifuel internal combustion engine of the third embodiment, if the fuel guided to the combustion chamber CC does not have a predetermined good ignitability though has a predetermined good volatility, the pre-mixed spark ignition flame propagation combustion mode is selected. On the other hand, if the fuel does not have either the predetermined good ignitability or the predetermined good volatility, the spark-assisted lean compression auto-ignition diffusion combustion mode is selected. Therefore, the multifuel internal combustion engine of the third embodiment can provide the same advantageous effects as in the multifuel internal combustion engines of the first and the second embodiments described above, and further, is able to realize stabilization of fuel in comparison with the multifuel internal combustion engines of the first and the second embodiments, particularly when the volatility of the fuel is bad. Further, the multifuel internal combustion engine can reduce the emission of NOx and the like by causing the pre-mixed spark ignition flame propagation combustion if the fuel has a good volatility even if its ignitability is bad, and further the multifuel internal combustion engine can reduce the emission of NOx and the like and improve the engine performance and the fuel consumption performance by causing the lean compression auto-ignition diffusion combustion by assisting the ignition with the spark ignition if the fuel has a bad ignitability and a bad volatility. Fourth Embodiment

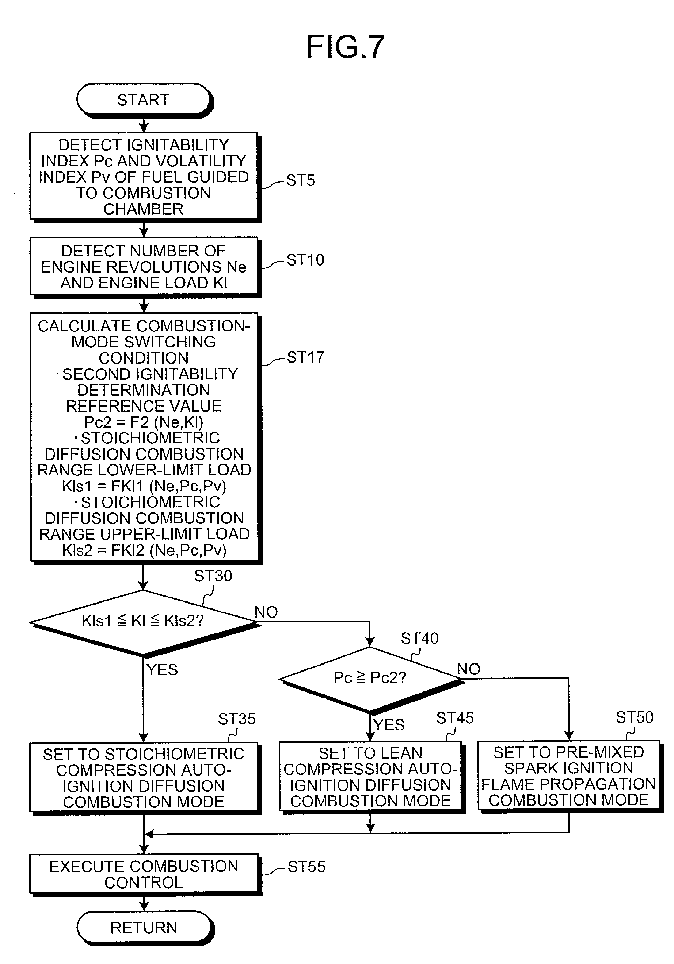

A multifuel internal combustion engine according to a fourth embodiment of the present invention is described with reference to FIGS. 7 to 10.

In the multifuel internal combustion engines of the first to the third embodiments described above, the combustion mode setting unit is configured so that the stoichiometric compression auto-ignition diffusion combustion (or the spark-assisted stoichiometric compression auto-ignition diffusion combustion) is not performed in the high-load range when the ignitability of the fuel guided to the combustion chamber CC is worse than a predetermined level, in view of the capability of the fuel supplied into the compressed air to cause auto-ignition. In the high-load range, however, the operation of the pre-mixed spark-ignition flame propagation combustion mode tends to cause knocking, and therefore is not favorable. On the other hand, when the engine is operated in the high-load range, the temperature of the compressed air is high, and therefore even the fuel with a bad ignitability can be made to cause auto-ignition.

A combustion mode setting unit of the fourth embodiment is configured to cause operation in the stoichiometric compression auto-ignition diffusion combustion mode (or the spark-assisted stoichiometric compression auto-ignition diffusion combustion mode) in the high-load range regardless of the good and bad of the ignitability of the fuel guided to the combustion chamber CC.

Firstly, a case where the configuration of the multifuel internal combustion engine of the first embodiment is changed according to the fourth embodiment is described with reference to a flowchart of FIG. 7.

A fuel property detecting unit of the electronic control unit 1 of the fourth embodiment detects the ignitability index Pc and the volatility index Pv of the fuel guided to the combustion chamber CC, and the number of engine revolutions Ne and the engine load Kl of the multifuel internal combustion engine, similarly to that in the first embodiment (steps ST5, ST10).

The combustion mode setting unit of the electronic control unit 1 calculates the combustion-mode switching condition (second ignitability determination reference value Pc2, stoichiometric diffusion combustion range lower-limit load Kls1, and stoichiometric diffusion combustion range upper-limit load Kls2) based on the ignitability index Pc, the volatility index Pv, the number of engine revolutions Ne, and the engine load Kl detected in steps ST5 and ST10 (step ST17).

The combustion mode setting unit of the fourth embodiment determines whether the corresponding combustion mode is the stoichiometric compression auto-ignition diffusion combustion mode ($Kls1 \leq Kl \leq Kls2$?) or not (step ST30).

When the engine load Kl detected in step ST10 is equal to or higher than the stoichiometric diffusion combustion range lower-limit load Kls1 and equal to or lower than the stoichiometric diffusion combustion range upper-limit load Kls2, the combustion mode setting unit sets the stoichiometric compression auto-ignition diffusion combustion mode as the combustion mode similarly to the first embodiment (step ST35).

On the other hand, when the engine load Kl is lower than the stoichiometric diffusion combustion range lower-limit load Kls1 or higher than the stoichiometric diffusion combustion range upper-limit load Kls2 in step ST30, the combustion mode setting unit selects a combustion mode other than the stoichiometric compression auto-ignition diffusion combustion mode. Similarly to the first embodiment, the combustion mode setting unit determines whether the ignitability index Pc detected in step ST5 represents a good ignitability suitable for the operation in the lean compression auto-ignition diffusion combustion mode or not ($Pc \geq Pc2$?) (step ST40). If the result of determination is YES, the combustion mode setting unit sets the lean compression auto-ignition diffusion combustion mode as the combustion mode (step ST45), and if the result of determination is NO, the combustion mode setting unit sets the pre-mixed spark ignition flame propagation combustion mode as the combustion mode (step ST50).

The combustion control execution unit of the electronic control unit 1 of the first embodiment executes the combustion control so as to make the engine operate in the combustion mode set as described above (step ST55).

Thus, the multifuel internal combustion engine of the fourth embodiment can provide the same advantageous effects as the first embodiment, and is further able to suppress the knocking by securely causing the stoichiometric compression auto-ignition diffusion combustion in the high-load range.

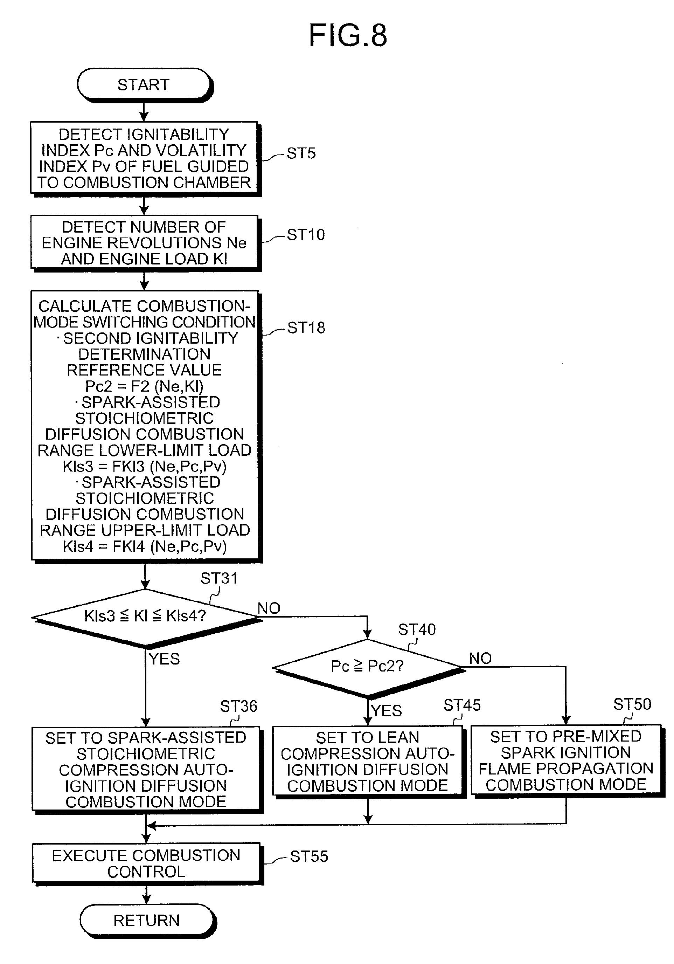

Further, a case where the configuration of the multifuel internal combustion engine of the second embodiment is changed according to the fourth embodiment is described with reference to a flowchart of FIG. 8.

A fuel property detecting unit of the electronic control unit 1 detects the ignitability index Pc and the volatility index Pv of the fuel guided to the combustion chamber CC, and the number of engine revolutions Ne and the engine load Kl of the multifuel internal combustion engine (steps St5 and ST10).

The combustion mode setting unit of the electronic control unit 1 calculates the combustion-mode switching condition (second ignitability determination reference value Pc2, spark-assisted stoichiometric diffusion combustion range lower-limit load Kls3, and spark-assisted stoichiometric diffusion combustion range upper-limit load Kls4) based on the ignitability index Pc, the volatility index Pv, the number of engine revolutions Ne, and the engine load Kl detected in steps ST5 and ST10 (step ST18).

The combustion mode setting unit of the fourth embodiment determines, similarly to the flowchart of FIG. 7, whether the corresponding combustion mode is the spark-assisted stoichiometric compression auto-ignition diffusion combustion mode or not ($Kls3 \leq Kl \leq Kls4$?) (step ST31).

When the engine load Kl detected in step ST10 is equal to or higher than the spark-assisted stoichiometric diffusion combustion range lower-limit load Kls3 and equal to or lower than the spark-assisted stoichiometric diffusion combustion range upper-limit load Kls4, the combustion mode setting unit sets the spark-assisted stoichiometric compression auto-ignition diffusion combustion mode as the combustion mode, similarly to the second embodiment (step ST36).

On the other hand, when the engine load Kl is lower than the spark-assisted stoichiometric diffusion combustion range lower-limit load Kls3 or higher than the spark-assisted stoichiometric diffusion combustion range upper-limit load Kls4 in step ST30, the combustion mode setting unit selects a combustion mode other than the spark-assisted stoichiometric compression auto-ignition diffusion combustion mode. Here, the same combustion mode as selected in the second embodiment or the flowchart of FIG. 7 is selected.

Thereafter, the combustion control execution unit of the electronic control unit 1 of the first embodiment executes the combustion control so as to make the engine operate in the combustion mode set as described above (step ST55).

Thus, the multifuel internal combustion engine of the fourth embodiment can provide the same advantageous effects as in the second embodiment and is further able to suppress the knocking by securely causing the stoichiometric compression auto-ignition diffusion combustion in the high-load range.

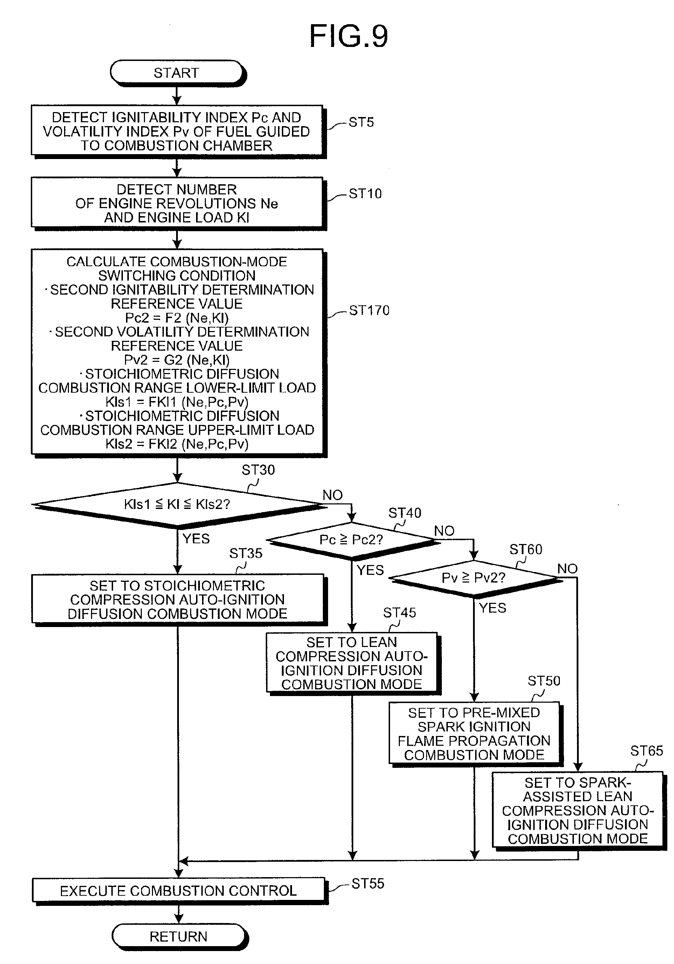

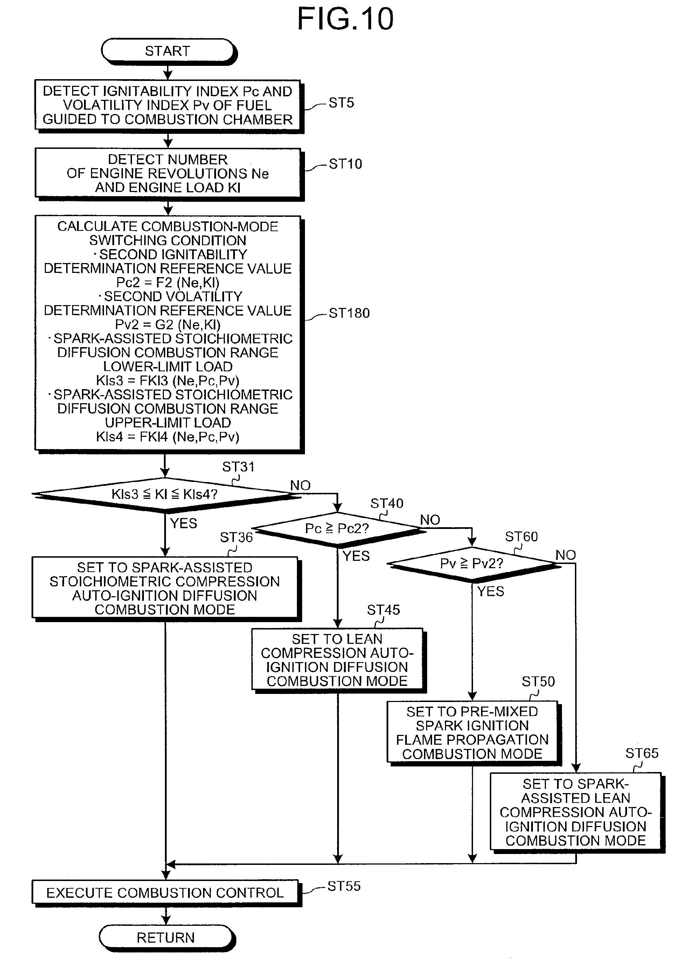

Further, a case where the configuration of the multifuel internal combustion engine of the third embodiment is changed according to the fourth embodiment is described with reference to flowcharts of FIGS. 9 and 10. In FIG. 9, a case where the multifuel internal combustion engine of the third embodiment which is based on the first embodiment is changed according to the fourth embodiment is described. Therefore, only the different points from the flowchart of FIG. 7 are described below. Further, in FIG. 10, a case where the multifuel internal combustion engine of the third embodiment which is based on the second embodiment is changed according to the fourth embodiment is described. Therefore, only the different points from the flowchart of FIG. 8 are described below.

The combustion mode setting unit of the electronic control unit 1 in this case calculates the second volatility determination reference value Pv2 in addition to the combustion-mode switching conditions found in FIG. 7 (or FIG. 8) respectively on calculating the combustion-mode switching conditions (steps ST170, ST180).

On determining that the ignitability index Pc is lower than the second ignitability determination reference value Pc2 in step ST40, the combustion mode setting unit determines, whether the volatility index Pv detected in step ST5 represents a good volatility suitable for the operation in the pre-mixed spark ignition flame propagation combustion mode or not (Pv≥Pv2?) similarly to the third embodiment (step ST60).

Similarly to the third embodiment, the combustion mode setting unit sets the pre-mixed spark ignition flame propagation combustion mode as the combustion mode (step ST50) when the result of determination in ST60 is YES, and sets the spark-assisted lean compression auto-ignition diffusion combustion mode as the combustion mode (step ST65) when the result of determination is NO.

**[0149]** Thus, the multifuel internal combustion engine of the fourth embodiment can provide the same advantageous effects as in the third embodiment and is further able to suppress the knocking by securely causing the stoichiometric compression auto-ignition diffusion combustion in the high-load range. For example, even in the high-load range, the fuel with a bad ignitability is difficult to auto-ignite while the engine is still cold, for example, immediately after the engine starts. However, when the ignition is assisted by the spark ignition, the stoichiometric compression auto-ignition diffusion combustion is allowed, and the generation of knocking can be suppressed.

As can be seen from the foregoing, the multifuel internal combustion engine of the fourth embodiment can securely suppress the generation of knocking in the high-load range in comparison with the first to the third embodiments described above by performing only the diffusion combustion in the high-load range without performing the pre-mixed spark ignition flame propagation combustion, thereby allowing increased torque and output in the high-load range. In other words, the multifuel internal combustion engine of the fourth embodiment can securely cause the stoichiometric compression auto-ignition diffusion combustion in the high-load range even when the ignitability of the fuel is bad, whereby the engine performance such as an output, the fuel consumption performance, and the emission performance in the high-load range can be improved without being affected by the ignitability of the fuel.

In the first to the fourth embodiments described above, the multifuel internal combustion engine of an in-cylinder direct injection type which directly injects the mixed fuel of the first fuel F1 and the second fuel F2 into the combustion chamber CC is described. Each of the first to the third embodiments according to the invention can be applied to a multifuel internal combustion engine which injects the mixed fuel to the intake port 11b in addition to the combustion chamber CC. Further, though in each of the first to the fourth embodiments, the fuel supply device 50 is configured so that the mixed fuel previously mixed by the fuel mixer 53 is injected through the fuel injection valve 57 to the combustion chamber CC, each of the fuels (first fuel F1 and second fuel F2) may be supplied separately to the combustion chamber CC not through the fuel mixer 53. In such multifuel internal combustion engine, each fuel injection valve is drive controlled so that a set fuel mixture ratio is achieved.

For example, the multifuel internal combustion engine of this type is configured based on the multifuel internal combustion engine of one of the first to the fourth embodiments with the fuel supply device 50 replaced with a fuel supply device 150 shown in FIG. 11. The fuel supply device 150 shown in FIG. 11 includes a first fuel supply path through which the first fuel F1 (with an excellent ignitability) is directly injected into the combustion chamber CC, and a second fuel supply path through which the second fuel F2 (with an excellent volatility) is injected to the intake port 11b. The first fuel supply path includes a first feed pump 52A which pumps up the first fuel F1 from the first fuel tank 41A and delivers to the first fuel channel 51A, a high-pressure fuel pump 55A which delivers the first fuel F1 in the first fuel channel 51A to the high-pressure fuel channel 54A by pressure, a delivery channel 56A which distributes the first fuel F1 in the high-pressure fuel channel 54A to each cylinder, and a fuel injection valve 57A which is provided for each cylinder to inject the first fuel F1 supplied from the delivery channel 56A to the combustion chamber CC. On the other hand, the second fuel supply path includes a second feed pump 52B which pumps up the second fuel F2 from the second fuel tank 41B and delivers to the second fuel channel 51B, a high-pressure fuel pump 55B which delivers the second fuel F2 in the second fuel channel 51B to the third fuel channel 54B by pressure, a delivery channel 56B which distributes the second fuel F2 in the third fuel channel 54B to each cylinder, and a fuel injection valve 57B which is provided for each cylinder to inject the second fuel F2 supplied from the delivery channel 56B to the intake port 11b.

INDUSTRIAL APPLICABILITY

As can be seen from the foregoing, the multifuel internal combustion engine of the present invention is useful for a technique for improving the engine performance, the fuel consumption performance, and the emission performance in the high-load range.

**Claims**

1.  A multifuel internal combustion engine operating by guiding at least one type of fuel among at least two types of fuels with different properties to a combustion chamber, or by guiding a mixed fuel of the at least two types of fuels to the combustion chamber, comprising:

    a fuel property detecting unit that detects an ignitability index and a volatility index respectively found through indexation of an ignitability and a volatility of the fuel in the combustion chamber;
    a combustion mode setting unit that sets a combustion mode to a stoichiometric compression auto-ignition diffusion combustion mode when the ignitability index and the volatility index detected by the fuel property detecting unit are respectively equal to or higher than an ignitability determination reference value and a volatility determination reference value satisfying a good ignitability and a good volatility suitable for the stoichiometric compression auto-ignition diffusion combustion mode, and an operation condition is of high-load; and
    a combustion control execution unit that causes an operation in a combustion mode set by the combustion mode setting unit.

2.  The multifuel internal combustion engine according to claim 1, wherein
    the combustion mode setting unit is configured to select a lean compression auto-ignition diffusion combustion mode when the ignitability index detected by the fuel property detecting unit is equal to or higher than an ignitability determination reference value satisfying a good ignitability suitable for the lean compression auto-ignition diffusion combustion mode, and to select a pre-mixed spark ignition flame propagation combustion mode when the ignitability index is lower than the ignitability determination reference value, in selecting a combustion mode other than the stoichiometric compression auto-ignition diffusion combustion mode.

3.  The multifuel internal combustion engine according to claim 1, wherein
    the combustion mode setting unit is configured to select a lean compression auto-ignition diffusion combustion mode when the ignitability index detected by the fuel property detecting unit is equal to or higher than an ignitability determination reference value satisfying a good ignitability suitable for the lean compression auto-ignition diffusion combustion mode, to select a pre-mixed spark ignition flame propagation combustion mode when the ignitability index is lower than the ignitability determination reference value and the volatility index detected by the fuel property detecting unit is equal to or higher than a volatility determination reference value satisfying a good volatility suitable for the pre-mixed spark ignition flame propagation combustion mode, and to select a spark-assisted lean compression auto-ignition diffusion combustion mode when the ignitability index is lower than the ignitability determination reference value and the volatility index is lower than the volatility determination reference value, in selecting a combustion mode other than the stoichiometric compression auto-ignition diffusion combustion mode.

4.  A multifuel internal combustion engine operating by guiding at least one type of fuel among at least two types of fuels with different properties to a combustion chamber, or by guiding a mixed fuel of the at least two types of fuels to the combustion chamber, comprising:

    a fuel property detecting unit that detects an ignitability index and a volatility index respectively found through indexation of an ignitability and a volatility of the fuel in the combustion chamber,

a combustion mode setting unit that sets a combustion mode to a stoichiometric compression auto-ignition diffusion combustion mode when an operation condition is of high-load, and sets the combustion mode to a mode other than the stoichiometric compression auto-ignition diffusion combustion mode when the operation condition is of middle- to low-load, and

a combustion control execution unit that causes an operation in the combustion mode set by the combustion mode setting unit,

the combustion mode setting unit being configured to select a lean compression auto-ignition diffusion combustion mode when the ignitability index detected by the fuel property detecting unit is equal to or higher than an ignitability determination reference value satisfying a good ignitability suitable for the lean compression auto-ignition diffusion combustion mode, and to select a pre-mixed spark ignition flame propagation combustion mode when the ignitability index is lower than the ignitability determination reference value, in selecting a combustion mode other than the stoichiometric compression auto-ignition diffusion combustion mode.

5. A multifuel internal combustion engine operating by guiding at least one type of fuel among at least two types of fuels with different properties to a combustion chamber, or by guiding a mixed fuel of the at least two types of fuels to the combustion chamber, comprising:

a fuel property detecting unit that detects an ignitability index and a volatility index respectively found through indexation of an ignitability and a volatility of the fuel in the combustion chamber,

a combustion mode setting unit that sets a combustion mode to a stoichiometric compression auto-ignition diffusion combustion mode when an operation condition is of high-load, and set the combustion mode to a mode other than the stoichiometric compression auto-ignition diffusion combustion mode when the operation condition is of middle- to low-load, and

a combustion control execution unit that causes an operation in the combustion mode set by the combustion mode setting unit,

the combustion mode setting unit being configured to select a lean compression auto-ignition diffusion combustion mode when the ignitability index detected by the fuel property detecting unit is equal to or higher than an ignitability determination reference value satisfying a good ignitability suitable for a lean compression auto-ignition diffusion combustion mode, to select a pre-mixed spark ignition flame propagation combustion mode when the ignitability index is lower than the ignitability determination reference value and the volatility index detected by the fuel property detecting unit is equal to or higher than a volatility determination reference value satisfying a good volatility suitable for the pre-mixed spark ignition flame propagation combustion mode, and to select a spark-assisted lean compression auto-ignition diffusion combustion mode when the ignitability index is lower than the ignitability determination reference value and the volatility index is lower than the volatility determination reference value, in selecting a combustion mode other than the stoichiometric compression auto-ignition diffusion combustion mode.

6. The multifuel internal combustion engine according to any one of claims 1 to 5, wherein

the combustion mode setting unit is configured to expand an operation range of the stoichiometric compression auto-ignition diffusion combustion mode in at least one of a direction of engine revolution and a direction of engine load as the ignitability and the volatility represented by the ignitability index and the volatility index detected by the fuel property detecting unit improve.

7. A multifuel internal combustion engine operating by guiding at least one type of fuel among at least two types of fuels with different properties to a combustion chamber, or by guiding a mixed fuel of the at least two types of fuels to the combustion chamber, comprising:

a fuel property detecting unit that detects a volatility index which is found through indexation of a volatility of the fuel in the combustion chamber;

a combustion mode setting unit that sets a combustion mode to a spark-assisted stoichiometric compression auto-ignition diffusion combustion mode when the volatility index detected by the fuel property detecting unit is equal to or higher than a volatility determination reference value satisfying a good volatility suitable for the spark-assisted stoichiometric compression auto-ignition diffusion combustion mode, and an operation condition is of high-load; and

a combustion control execution unit that causes an operation in the combustion mode set by the combustion mode setting unit.

**8.** The multifuel internal combustion engine according to claim 7, wherein
the combustion mode setting unit is configured to select a lean compression auto-ignition diffusion combustion mode when the ignitability index detected by the fuel property detecting unit is equal to or higher than an ignitability determination reference value satisfying a good ignitability suitable for the lean compression auto-ignition diffusion combustion mode, and to select a pre-mixed spark ignition flame propagation combustion mode when the ignitability index is lower than the ignitability determination reference value, in selecting a combustion mode other than the spark-assisted stoichiometric compression auto-ignition diffusion combustion mode.

**9.** The multifuel internal combustion engine according to claim 7, wherein
the combustion mode setting unit is configured to select a lean compression auto-ignition diffusion combustion mode when the ignitability index detected by the fuel property detecting unit is equal to or higher than an ignitability determination reference value satisfying a good ignitability suitable for the lean compression auto-ignition diffusion combustion mode, to select a pre-mixed spark ignition flame propagation combustion mode when the ignitability index is lower than the ignitability determination reference value and the volatility index detected by the fuel property detecting unit is equal to or higher than a volatility determination reference value satisfying a good volatility suitable for the pre-mixed spark ignition flame propagation combustion mode, and to select a spark-assisted lean compression auto-ignition diffusion combustion mode when the ignitability index is lower than the ignitability determination reference value and the volatility index is lower than the volatility determination reference value, in selecting a combustion mode other than the spark-assisted stoichiometric compression auto-ignition diffusion combustion mode.

**10.** A multifuel internal combustion engine operating by guiding at least one type of fuel among at least two types of fuels with different properties to a combustion chamber, or by guiding a mixed fuel of the at least two types of fuels to the combustion chamber, comprising:

a fuel property detecting unit that detects an ignitability index and a volatility index respectively found through indexation of an ignitability and a volatility of the fuel in the combustion chamber,
a combustion mode setting unit that sets a combustion mode to a spark-assisted stoichiometric compression auto-ignition diffusion combustion mode when an operation condition is of high-load and sets the combustion mode to a mode other than the spark-assisted stoichiometric compression auto-ignition diffusion combustion mode when the operation mode is of middle- to low-load, and
a combustion control execution unit that causes an operation in the combustion mode set by the combustion mode setting unit,
the combustion mode setting unit being configured to select a lean compression auto-ignition diffusion combustion mode when the ignitability index detected by the fuel property detecting unit is equal to or higher than an ignitability determination reference value satisfying a good ignitability suitable for the lean compression auto-ignition diffusion combustion mode, and to select a pre-mixed spark ignition flame propagation combustion mode when the ignitability index is lower than the ignitability determination reference value, in selecting a combustion mode other than the spark-assisted stoichiometric compression auto-ignition diffusion combustion mode.

**11.** A multifuel internal combustion engine operating by guiding at least one type of fuel among at least two types of fuels with different properties to a combustion chamber, or by guiding a mixed fuel of the at least two types of fuels to the combustion chamber, comprising:

a fuel property detecting unit that detects an ignitability index and a volatility index respectively found through indexation of an ignitability and a volatility of the fuel in the combustion chamber,
a combustion mode setting unit that sets a combustion mode to a spark-assisted stoichiometric compression auto-ignition diffusion combustion mode when an operation condition is of high-load and sets the combustion mode to a mode other than the spark-assisted stoichiometric compression auto-ignition diffusion combustion mode when the operation condition is of middle- to low-load, and
a combustion control execution unit that causes an operation in the combustion mode set by the combustion mode setting unit,
the combustion mode setting unit being configured to select a lean compression auto-ignition diffusion combustion mode when the ignitability index detected by the fuel property detecting unit is equal to or higher than an ignitability determination reference value satisfying a good ignitability suitable for the lean compression auto-ignition diffusion combustion mode, to select a pre-mixed spark ignition flame propagation combustion mode when the ignitability index is lower than the ignitability determination reference value and the volatility index detected by the fuel property detecting unit is equal to or higher than a volatility determination reference value satisfying a good volatility suitable for the pre-mixed spark ignition flame propagation combustion mode, and to select a spark-assisted lean compression auto-ignition diffusion combustion mode when the ignitability index is lower than the ignitability determination reference value and the volatility index is lower than the volatility determination reference value, in selecting a combustion mode other than the spark-assisted stoichiometric compression auto-ignition diffusion combustion mode.

12. The multifuel internal combustion engine according to any one of claims 7 to 11, wherein
the combustion mode setting unit is configured to expand an operation range of the spark-assisted stoichiometric compression auto-ignition diffusion combustion mode in at least one of a direction of engine revolution and a direction of engine load as the volatility represented by the volatility index detected by the fuel property detecting unit improves.

FIG.1

EP 2 034 162 A1

# FIG.2

ENGINE LOAD KI

Ls2 = FKI2 (Pc,Pv)          ENTIRE LOAD

STOICHIOMETRIC COMPRESSION
AUTO-IGNITION DIFFUSION          IGNITABILITY AND
COMBUSTION MODE          VOLATILITY - GOOD

Ls1 = FKI1 (Pc,Pv)

PRE-MIXED SPARK IGNITION FLAME
PROPAGATION COMBUSTION MODE
OR
LEAN COMPRESSION AUTO-IGNITION
DIFFUSION COMBUSTION MODE

NUMBER OF ENGINE
REVOLUTIONS Ne

# FIG.3

START

DETECT IGNITABILITY INDEX Pc
AND VOLATILITY INDEX Pv
OF FUEL GUIDED
TO COMBUSTION CHAMBER — ST5

DETECT NUMBER
OF ENGINE REVOLUTIONS Ne
AND ENGINE LOAD KI — ST10

CALCULATE COMBUSTION-MODE
SWITCHING CONDITION
·FIRST IGNITABILITY
DETERMINATION REFERENCE VALUE
$Pc1 = F1 (Ne,KI)$
·SECOND IGNITABILITY
DETERMINATION REFERENCE VALUE
$Pc2 = F2 (Ne,KI)$
·FIRST VOLATILITY DETERMINATION
REFERENCE VALUE
$Pv1 = G1 (Ne,KI)$
·STOICHIOMETRIC DIFFUSINON
COMBUSTION RANGE
LOWER-LIMIT LOAD
$KIs1 = FKI1 (Ne,Pc,Pv)$
·STOICHIOMETRIC DIFFUSION
COMBUSTION RANGE
UPPER-LIMIT LOAD
$KIs2 = FKI2(Ne,Pc,Pv)$ — ST15

ST20

$Pc \geqq Pc1$? — NO

YES · ST25

$Pv \geqq Pv1$? — NO

YES · ST30

$KIs1 \leqq KI \leqq KIs2$? — NO

YES

ST40

$Pc \geqq Pc2$? — NO

YES · ST45

ST35
SET TO STOICHIOMETRIC
COMPRESSION AUTO-IGNITION
DIFFUSION COMBUSTION MODE

ST45
SET TO LEAN
COMPRESSION AUTO-
IGNITION DIFFUSION
COMBUSTION MODE

ST50
SET TO PRE-MIXED
SPARK IGNITION
FLAME PROPAGATION
COMBUSTION MODE

EXECUTE COMBUSTION CONTROL — ST55

RETURN

27

# FIG.4

```
                    ┌─────────────┐
                    │    START    │
                    └─────────────┘
                           │
    ┌──────────────────────────────────────┐
    │ DETECT IGNITABILITY INDEX             │ ── ST5
    │ Pc AND VOLATILITY INDEX Pv            │
    │ OF FUEL GUIDED TO                     │
    │ COMBUSTION CHAMBER                    │
    └──────────────────────────────────────┘
                           │
    ┌──────────────────────────────────────┐
    │ DETECT NUMBER                         │ ── ST10
    │ OF ENGINE REVOLUTIONS Ne              │
    │ AND ENGINE LOAD KI                    │
    └──────────────────────────────────────┘
                           │
    ┌──────────────────────────────────────┐
    │ CALCULATE COMBUSTION-                 │
    │ MODE SWITCHING CONDITION              │
    │ · SECOND IGNITABILITY                 │
    │   DETERMINATION                       │
    │   REFERENCE VALUE                     │
    │   Pc2 = F2 (Ne,KI)                    │ ── ST16
    │ · FIRST VOLATILITY                    │
    │   DETERMINATION                       │
    │   REFERENCE VALUE                     │
    │   Pv1 = G1 (Ne,KI)                    │
    │ · SPARK-ASSISTED                      │
    │   STOICHIOMETRIC DIFFUSION            │
    │   COMBUSTION RANGE                    │
    │   LOWER-LIMIT LOAD                    │
    │   KIs3 = FKI3 (Ne,Pc,Pv)             │
    │ · SPARK-ASSISTED                      │
    │   STOICHIOMETRIC DIFFUSION            │
    │   COMBUSTION RANGE                    │
    │   UPPER-LIMIT LOAD                    │
    │   KIs4 = FKI4 (Ne,Pc,Pv)             │
    └──────────────────────────────────────┘
```

ST26

$Pv \geqq Pv1?$ — NO

YES   ST31

$KIs3 \leqq KI \leqq KIs4?$ — NO

ST40

$Pc \geqq Pc2?$ — NO

YES

| ST36 | ST45 | ST50 |
|---|---|---|
| SET TO SPARK-ASSISTED STOICHIOMETRIC COMPRESSION AUTO-IGNITION DIFFUSION COMBUSTION MODE | SET TO LEAN COMPRESSION AUTO-IGNITION DIFFUSION COMBUSTION MODE | SET TO PRE-MIXED SPARK IGNITION FLAME PROPAGATION COMBUSTION MODE |

```
    ┌──────────────────────────────────────┐
    │ EXECUTE COMBUSTION                    │ ── ST55
    │ CONTROL                               │
    └──────────────────────────────────────┘
                           │
                    ┌─────────────┐
                    │   RETURN    │
                    └─────────────┘
```

# FIG.5

START

DETECT IGNITABILITY INDEX Pc
AND VOLATILITY INDEX Pv
OF FUEL GUIDED TO COMBUSTION CHAMBER — ST5

DETECT NUMBER OF ENGINE REVOLUTIONS Ne
AND ENGINE LOAD KI — ST10

CALCULATE COMBUSTION-MODE SWITCHING
CONDITION
· FIRST IGNITABILITY DETERMINATION
REFERENCE VALUE
$Pc1 = F1 (Ne, KI)$
· SECOND IGNITABILITY DETERMINATION
REFERENCE VALUE
$Pc2 = F2 (Ne, KI)$
· FIRST VOLATILITY DETERMINATION
REFERENCE VALUE
$Pv1 = G1 (Ne, KI)$
· SECOND VOLATILITY DETERMINATION
REFERENCE VALUE
$Pv2 = G2 (Ne, KI)$
· STOICHIOMETRIC DIFFUSION COMBUSTION
RANGE LOWER-LIMIT LOAD
$KIs1 = FKI1 (Ne, Pc, Pv)$
· STOICHIOMETRIC DIFFUSION COMBUSTION
RANGE UPPER-LIMIT LOAD
$KIs2 = FKI2 (Ne, Pc, Pv)$ — ST150

ST20
$Pc \geqq Pc1$?  NO

YES  ST25
$Pv \geqq Pv1$?  NO

YES  ST30
$KIs1 \leqq KI \leqq KIs2$?  NO

YES  ST35

ST40
$Pc \geqq Pc2$?  NO

YES  ST60
$Pv \geqq Pv2$?  NO

SET TO STOICHIOMETRIC COMPRESSION
AUTO-IGNITION DIFFUSION COMBUSTION MODE

ST45
SET TO LEAN
COMPRESSION AUTO-
IGNITION DIFFUSION
COMBUSTION MODE

YES

ST50
SET TO PRE-MIXED SPARK
IGNITION FLAME
PROPAGATION
COMBUSTION MODE

ST65
SET TO SPARK-ASSISTED
LEAN COMPRESSION
AUTO-IGNITION DIFFUSION
COMBUSTION MODE

EXECUTE COMBUSTION CONTROL — ST55

RETURN

# FIG.6

START

DETECT IGNITABILITY INDEX Pc
AND VOLATILITY INDEX Pv OF FUEL GUIDED
TO COMBUSTION CHAMBER — ST5

DETECT NUMBER OF ENGINE REVOLUTIONS
Ne AND ENGINE LOAD Kl — ST10

CALCULATE COMBUSTION-MODE
SWITCHING CONDITION
· SECOND IGNITABILITY DETERMINATION
REFERENCE VALUE
Pc2 = F2 (Ne,Kl)
· FIRST VOLATILITY DETERMINATION
REFERENCE VALUE
Pv1 = G1 (Ne,Kl)
· SECOND VOLATILITY DETERMINATION
REFERENCE VALUE
Pv2 = G2 (Ne,Kl)
· SPARK-ASSISTED STOICHIOMETRIC
DIFFUSION COMBUSTION RANGE
LOWER-LIMIT LOAD
Kls3 = FKl3 (Ne,Pc,Pv)
· SPARK-ASSISTED STOICHIOMETRIC
DIFFUSION COMBUSTION RANGE
UPPER-LIMIT LOAD
Kls4 = FKl4 (Ne,Pc,Pv) — ST160

ST26
$Pv \geqq Pv1$?  NO

YES
ST31
$Kls3 \leqq Kl \leqq Kls4$?  NO

YES
ST36
SET TO SPARK-ASSISTED
STOICHIOMETRIC COMPRESSION AUTO-
IGNITION DIFFUSION COMBUSTION MODE

ST40
$Pc \geqq Pc2$?  NO

YES
ST60
$Pv \geqq Pv2$?  NO

YES
ST45
SET TO LEAN
COMPRESSION AUTO-
IGNITION DIFFUSION
COMBUSTION MODE

ST50
SET TO PRE-MIXED SPARK
IGNITION FLAME
PROPAGATION
COMBUSTION MODE

ST65
SET TO SPARK-ASSISTED
LEAN COMPRESSION
AUTO-IGNITION DIFFUSION
COMBUSTION MODE

EXECUTE COMBUSTION CONTROL — ST55

RETURN

# FIG.7

```
                    ( START )
                       │
                       ▼
        ┌──────────────────────────┐
        │  DETECT IGNITABILITY     │
        │  INDEX Pc AND VOLATILITY │
        │  INDEX Pv OF FUEL GUIDED │──── ST5
        │  TO COMBUSTION           │
        │  CHAMBER                 │
        └──────────────────────────┘
                       │
                       ▼
        ┌──────────────────────────┐
        │  DETECT NUMBER OF        │
        │  ENGINE REVOLUTIONS Ne   │──── ST10
        │  AND ENGINE LOAD Kl      │
        └──────────────────────────┘
                       │
                       ▼
        ┌──────────────────────────┐
        │  CALCULATE COMBUSTION-   │
        │  MODE SWITCHING          │
        │  CONDITION               │
        │  · SECOND IGNITABILITY   │──── ST17
        │  DETERMINATION           │
        │  REFERENCE VALUE         │
        │  Pc2 = F2 (Ne,Kl)        │
        │  · STOICHIOMETRIC        │
        │  DIFFUSION COMBUSTION    │
        │  RANGE LOWER-LIMIT LOAD  │
        │  Kls1 = FKl1 (Ne,Pc,Pv)  │
        │  · STOICHIOMETRIC        │
        │  DIFFUSION COMBUSTION    │
        │  RANGE UPPER-LIMIT LOAD  │
        │  Kls2 = FKl2 (Ne,Pc,Pv)  │
        └──────────────────────────┘
                       │            ST30
                       ▼
              ╱─────────────────╲        NO
             ⟨  Kls1 ≦ Kl ≦ Kls2? ⟩───────────────┐
              ╲─────────────────╱                 │      ST40
                       │ YES                       ▼
                       │                    ╱──────────────╲    NO
                       │                   ⟨  Pc ≧ Pc2?     ⟩──────────┐
                       │                    ╲──────────────╱           │
                       │                           │ YES               │
         ST35          ▼              ST45         ▼          ST50      ▼
   ┌──────────────────┐      ┌──────────────────┐      ┌──────────────────┐
   │ SET TO STOICHIO- │      │ SET TO LEAN      │      │ SET TO PRE-MIXED │
   │ METRIC           │      │ COMPRESSION AUTO-│      │ SPARK IGNITION   │
   │ COMPRESSION AUTO-│      │ IGNITION DIFFUSION│     │ FLAME PROPAGATION│
   │ IGNITION DIFFUSION│     │ COMBUSTION MODE  │      │ COMBUSTION MODE  │
   │ COMBUSTION MODE  │      └──────────────────┘      └──────────────────┘
   └──────────────────┘               │                        │
            │                          │                        │
            │◄─────────────────────────┴────────────────────────┘
            ▼
   ┌──────────────────┐
   │ EXECUTE COMBUSTION│──── ST55
   │ CONTROL          │
   └──────────────────┘
            │
            ▼
      ( RETURN )
```

# FIG.8

```
                    ┌──────────────┐
                    │    START     │
                    └──────┬───────┘
                           │
        ┌──────────────────────────────────┐
        │ DETECT IGNITABILITY              │
        │ INDEX Pc AND VOLATILITY          │── ST5
        │ INDEX Pv OF FUEL GUIDED          │
        │ TO COMBUSTION CHAMBER            │
        └──────────────────┬───────────────┘
                           │
        ┌──────────────────────────────────┐
        │ DETECT NUMBER OF                 │
        │ ENGINE REVOLUTIONS Ne            │── ST10
        │ AND ENGINE LOAD KI               │
        └──────────────────┬───────────────┘
                           │
        ┌──────────────────────────────────┐
        │ CALCULATE COMBUSTION-            │
        │ MODE SWITCHING CONDITION         │── ST18
        │ · SECOND IGNITABILITY            │
        │   DETERMINATION                  │
        │   REFERENCE VALUE                │
        │   Pc2 = F2 (Ne,KI)               │
        │ · SPARK-ASSISTED                 │
        │   STOICHIOMETRIC                 │
        │ DIFFUSION COMBUSTION             │
        │ RANGE LOWER-LIMIT LOAD           │
        │   KIs3 = FKI3 (Ne,Pc,Pv)         │
        │ · SPARK-ASSISTED                 │
        │   STOICHIOMETRIC                 │
        │ DIFFUSION COMBUSTION             │
        │ RANGE UPPER-LIMIT LOAD           │
        │   KIs4 = FKI4 (Ne,Pc,Pv)         │
        └──────────────────┬───────────────┘
```

ST31

KIs3 ≦ KI ≦ KIs4? — NO

YES

ST40

Pc ≧ Pc2? — NO

YES

ST36 — SET TO SPARK-ASSISTED STOICHIOMETRIC COMPRESSION AUTO-IGNITION DIFFUSION COMBUSTION MODE

ST45 — SET TO LEAN COMPRESSION AUTO-IGNITION DIFFUSION COMBUSTION MODE

ST50 — SET TO PRE-MIXED SPARK IGNITION FLAME PROPAGATION COMBUSTION MODE

ST55 — EXECUTE COMBUSTION CONTROL

RETURN

# FIG.9

START

DETECT IGNITABILITY INDEX Pc AND VOLATILITY INDEX Pv OF FUEL GUIDED TO COMBUSTION CHAMBER — ST5

DETECT NUMBER OF ENGINE REVOLUTIONS Ne AND ENGINE LOAD KI — ST10

CALCULATE COMBUSTION-MODE SWITCHING CONDITION
· SECOND IGNITABILITY DETERMINATION REFERENCE VALUE
Pc2 = F2 (Ne,KI)
· SECOND VOLATILITY DETERMINATION REFERENCE VALUE
Pv2 = G2 (Ne,KI)
· STOICHIOMETRIC DIFFUSION COMBUSTION RANGE LOWER-LIMIT LOAD
KIs1 = FKI1 (Ne,Pc,Pv)
· STOICHIOMETRIC DIFFUSION COMBUSTION RANGE UPPER-LIMIT LOAD
KIs2 = FKI2 (Ne,Pc,Pv) — ST170

ST30
KIs1 ≦ KI ≦ KIs2?
NO → ST40
Pc ≧ Pc2?
NO → ST60
Pv ≧ Pv2?

YES ST35
SET TO STOICHIOMETRIC COMPRESSION AUTO-IGNITION DIFFUSION COMBUSTION MODE

YES ST45
SET TO LEAN COMPRESSION AUTO-IGNITION DIFFUSION COMBUSTION MODE

YES ST50
SET TO PRE-MIXED SPARK IGNITION FLAME PROPAGATION COMBUSTION MODE

NO ST65
SET TO SPARK-ASSISTED LEAN COMPRESSION AUTO-IGNITION DIFFUSION COMBUSTION MODE

EXECUTE COMBUSTION CONTROL — ST55

RETURN

# FIG.10

START

DETECT IGNITABILITY INDEX Pc AND VOLATILITY INDEX Pv OF FUEL GUIDED TO COMBUSTION CHAMBER ──ST5

DETECT NUMBER OF ENGINE REVOLUTIONS Ne AND ENGINE LOAD Kl ──ST10

CALCULATE COMBUSTION-MODE SWITCHING CONDITION
· SECOND IGNITABILITY DETERMINATION REFERENCE VALUE
Pc2 = F2 (Ne,Kl)
· SECOND VOLATILITY DETERMINATION REFERENCE VALUE
Pv2 = G2 (Ne,Kl)
· SPARK-ASSISTED STOICHIOMETRIC DIFFUSION COMBUSTION RANGE LOWER-LIMIT LOAD
Kls3 = FKl3 (Ne,Pc,Pv)
· SPARK-ASSISTED STOICHIOMETRIC DIFFUSION COMBUSTION RANGE UPPER-LIMIT LOAD
Kls4 = FKl4 (Ne,Pc,Pv) ──ST180

ST31
Kls3 ≦ Kl ≦ Kls4? ── NO

YES

ST40
Pc ≧ Pc2? ── NO

YES

ST60
Pv ≧ Pv2? ── NO

YES

ST36
SET TO SPARK-ASSISTED STOICHIOMETRIC COMPRESSION AUTO-IGNITION DIFFUSION COMBUSTION MODE

ST45
SET TO LEAN COMPRESSION AUTO-IGNITION DIFFUSION COMBUSTION MODE

ST50
SET TO PRE-MIXED SPARK IGNITION FLAME PROPAGATION COMBUSTION MODE

ST65
SET TO SPARK-ASSISTED LEAN COMPRESSION AUTO-IGNITION DIFFUSION COMBUSTION MODE

EXECUTE COMBUSTION CONTROL ──ST55

RETURN

34

# FIG.11

## INTERNATIONAL SEARCH REPORT

| International application No. |
| --- |
| PCT/JP2007/061817 |

A.  CLASSIFICATION OF SUBJECT MATTER
*F02D19/08*(2006.01)i, *F02B1/12*(2006.01)i, *F02B11/00*(2006.01)i, *F02B15/00*
(2006.01)i, *F02B23/10*(2006.01)i, *F02D41/02*(2006.01)i, *F02D41/04*(2006.01)i,
*F02D45/00*(2006.01)i
According to International Patent Classification (IPC) or to both national classification and IPC

B.  FIELDS SEARCHED

Minimum documentation searched (classification system followed by classification symbols)
F02D19/08, F02B1/12, F02B11/00, F02B15/00, F02B23/10, F02D41/02,
F02D41/04, F02D45/00

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho  1971-2007   Toroku Jitsuyo Shinan Koho   1994-2007

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| A | JP 2004-245126 A  (Toyota Motor Corp.),<br>02 September, 2004 (02.09.04),<br>Full text; all drawings<br>(Family: none) | 1-12 |
| A | JP 9-068061 A  (Nippon Soken, Inc.),<br>11 March, 1997 (11.03.97),<br>Par. Nos. [0013] to [0014]; Fig. 1<br>(Family: none) | 1-12 |
| A | JP 2001-254660 A  (Toyota Motor Corp.),<br>21 September, 2001 (21.09.01),<br>Claim 1<br>& US 6725827 B2        & EP 1267070 A1 | 3,5-12 |

| ☒  Further documents are listed in the continuation of Box C. | ☐  See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    03 July, 2007 (03.07.07) | Date of mailing of the international search report<br>    10 July, 2007 (10.07.07) |
| --- | --- |
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2007/061817

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2002-038981 A  (Nissan Motor Co., Ltd.),<br>06 February, 2002 (06.02.02),<br>Full text; all drawings<br>(Family: none) | 1-12 |
| A | JP 2006-233839 A  (Toyota Motor Corp.),<br>07 September, 2006 (07.09.06),<br>Claim 1; Par. Nos. [0123] to [0129]<br>& WO 2006/090884 A1 | 1-12 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004245126 A

- JP H968061 B